(19) Europäisches Patentamt
European Patent Office
Office européen des brevets

(11)  EP 2 329 294 B1

(12)  EUROPÄISCHE PATENTSCHRIFT

(45) Veröffentlichungstag und Bekanntmachung des Hinweises auf die Patenterteilung:
01.10.2014  Patentblatt 2014/40

(51) Int Cl.:
G01S 17/10 (2006.01)       G01S 5/16 (2006.01)
G01S 7/486 (2006.01)       G01S 13/46 (2006.01)

(21) Anmeldenummer: 09778055.5

(22) Anmeldetag: 22.08.2009

(86) Internationale Anmeldenummer:
PCT/EP2009/006106

(87) Internationale Veröffentlichungsnummer:
WO 2010/025845 (11.03.2010 Gazette 2010/10)

(54) **VORRICHTUNG UND VERFAHREN ZUM BESTIMMEN EINER OBJEKTPOSITION**

DEVICE AND METHOD FOR DETERMINING AN OBJECT POSITION

PROCÉDÉ ET DISPOSITIF DE DÉTERMINATION DE LA POSITION D'UN OBJET

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(30) Priorität: 02.09.2008  DE 102008045386

(43) Veröffentlichungstag der Anmeldung:
08.06.2011  Patentblatt 2011/23

(73) Patentinhaber: Carl Zeiss AG
73447 Oberkochen (DE)

(72) Erfinder:
• ALVAREZ DIEZ, Cristina
73431 Aalen (DE)
• HÖLLER, Frank
73434 Aalen (DE)
• SPRUCK, Bernd
73563 Moegglingen (DE)
• TREMONT, Marc
73614 Schorndorf (DE)

(74) Vertreter: Sticht, Andreas
Kraus & Weisert
Patentanwälte PartGmbB
Thomas-Wimmer-Ring 15
80539 München (DE)

(56) Entgegenhaltungen:
US-A- 4 818 100       US-A- 4 856 893
US-A- 5 793 483

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Vorrichtung und ein Verfahren zum Bestimmen einer Position eines Objekts in einem Raumbereich. Insbesondere betrifft die vorliegende Erfindung eine Vorrichtung und ein Verfahren zum Bestimmen einer Position eines Objekts unter Verwendung optischer Messverfahren.

Die Bestimmung der Position eines Objekts relativ zu einem anderen Objekt bzw. absolut in einem definierten Raum findet in einer Vielzahl von Gebieten Anwendung, beispielsweise bei der Steuerung oder Regelung von verschiedenen Maschinen und Geräten in der Industrie, Medizin oder Unterhaltungsbranche. Bei industriellen Koordinatenmessmaschinen und Roboterarmen sind beispielsweise häufig zeitaufwendige Kalibrierungen erforderlich, um das mechanische Verhalten, wie Durchbiegung und Torsion, in die Mess- bzw. Steuerungssoftware einzubinden und so bei der Messung bzw. Steuerung zu berücksichtigen. Durch eine Positionsbestimmung eines Roboterarms mit einer hohen Genauigkeit könnten derartige Kalibrierungsverfahren oder die Regelung bzw. Steuerung des Roboterarms unterstützt werden.

Die Realisierung von Vorrichtungen und Verfahren, bei denen Positionen in Räumen von einigen Metern Länge mit einer Genauigkeit im Mikrometerbereich bestimmt wird, stellt eine technische Herausforderung dar. Dies gilt insbesondere, wenn Positionen mit einer hohen Rate und kurzen Signalverarbeitungzeit bestimmt werden sollen, um eine Positionsbestimmung in Echtzeit zu ermöglichen, und eine Justage von Komponenten der Messvorrichtung möglichst einfach vornehmbar sein soll.

Lasertracker, die die Bestimmung der drei Raumkoordinaten eines Objekts ermöglichen, kombinieren ein Laserweglängenmessgerät mit einem hochpräzisen, doppelkardanisch aufgehängten Umlenkspiegel. Aus dem gemessenen Abstand und den beiden Ablenkwinkeln des Umlenkspiegels kann die Objektposition bestimmt werden. Derartige Lasertracker erfordern jedoch eine präzise Steuerung der Umlenkspiegel und eine genaue Kenntnis des jeweiligen Ablenkwinkels des Umlenkspiegels. Die entsprechende Aktorik stellt einen erheblichen Kostenfaktor dar.

Bei geometrisch optischen Verfahren wird beispielsweise eine am Objekt befestigte Lichtquelle mit mindestens zwei Kameras beobachtet und daraus die Objektposition mittels Triangulation bestimmt. Diese Verfahren werden jedoch häufig ungenau, wenn der Abstand von Kamera zu Objekt stark variiert.

Aus der DE 101 18 392 A1 ist ein System und ein Verfahren zum Bestimmen einer Position zweier Objekte zueinander bekannt. Das Verfahren verwendet die Kohärenzeigenschaften von Laserstrahlung zur Abstandsermittlung, bei der mehrere Lichtstrahlen kohärent überlagert werden.

Laserweglängenmessgeräte erlauben die Bestimmung eines Abstands eines Objekts. In K. Minoshima and H. Matsumoto, "High-accuracy measurement of 240-m distance in an optical tunnel by use of a compact femtosecond laser", Applied Optics, Vol. 39, No. 30, pp. 5512-5517 (2000) wird eine Distanzmessung unter Verwendung von Frequenzkämmen beschrieben. Die Messung kann zwar mit hoher Genauigkeit erfolgen, ist aber auf eine Dimension beschränkt.

Die US 5 793 483 A offenbart ein optisches Messsystem, bei dem eine Lichtquelle oder mehrere Lichtquellen ein Sendelicht abstrahlen. Das Messsystem umfasst eine Detektoranordnung mit mehreren Detektoren, die eingerichtet ist, um an einem Objekt in unterschiedliche Richtungen gestreute Lichtsignale zu empfangen. Mehrere Phasenprozessoren sind mit den Detektoren gekoppelt und eingerichtet, um für jedes Lichtsignal der von den mehreren Detektoren erfassten Lichtsignale eine zugeordnete Phasendifferenz zwischen einem Referenzsignal und einer Signalkomponente des entsprechenden Lichtsignals zu ermitteln. Ein Computer ist mit den Phasenprozessoren gekoppelt und eingerichtet, um eine Objektposition basierend auf den der Mehrzahl von Lichtsignalen zugeordneten Phasendifferenzen zu bestimmen.

Die US 4 856 893 A und die US 4 818 100 A offenbaren jeweils ein optisches Messsystem. Dabei werden die Ausgangssignale eines Dauerstrichlasers und eines gepulsten Lasers in einem Strahl kombiniert. Der Strahl wird auf eine Oberfläche gerichtet. Eine Richtung des Strahls ist durch einen Scanspiegel veränderbar. Die von dem Strahl durchlaufene Weglänge wird ermittelt. Die Weglänge kann mit der Einstellung des Scanspiegels rechnerisch kombiniert werden, um Positionsinformationen zu erhalten.

Der vorliegenden Erfindung liegt die Aufgabe zugrunde, eine verbesserte Vorrichtung und ein verbessertes Verfahren zur Bestimmung einer Position eines Objekts anzugeben. Insbesondere liegt der Erfindung die Aufgabe zugrunde, eine derartige Vorrichtung und ein derartiges Verfahren anzugeben, die bzw. das eine schnelle Positionsbestimmung mit hoher Auflösung erlaubt und zur Bestimmung von mehr als einer Koordinate des Objekts geeignet ist.

Erfindungsgemäß wird diese Aufgabe gelöst durch Vorrichtungen und ein Verfahren, wie sie in den unabhängigen Ansprüchen angegeben sind. Die abhängigen Ansprüche definieren vorteilhafte oder bevorzugte Ausführungsbeispiele.

Die angegebene Vorrichtung und das angegebene Verfahren erlauben es, die Position eines Objekts in einem Raumbereich zu bestimmen. Unter "Bestimmung der Position des Objekts in dem Raumbereich" wird dabei allgemein die Bestimmung von wenigstens zwei die Position des Objekts definierenden Koordinaten verstanden, bei denen es sich um Längen- und/oder Winkelangaben handeln kann. Der so verwendete Begriff der Positionsbestimmung beinhaltet somit die Bestimmung von Größen, die die Lage des Objekts im Raum, d.h. die Position eines vorgegebenen Objektpunkts im Raum, kennzeichnen, und auch die alternative oder zusätzliche Bestimmung von Größen, die die Ausrichtung des Objekts relativ zu den Raumachsen, d.h. die Position von mehreren vorgegebenen Objektpunkten zueinander, kennzeichnen.

Eine Vorrichtung zum Bestimmen einer Position eines Objekts in einem Raumbereich nach einem Aspekt umfasst eine Lichtquelle, eine Lichtlenkeinrichtung, wenigstens einen Referenzsignaldetektor und eine Detektoranordnung sowie eine mit dem wenigstens einen Referenzsignaldetektor und der Detektoranordnung gekoppelte Auswerteschaltung. Die Lichtquelle erzeugt im Betrieb eine Folge von Lichtpulsen mit einer Repetitionsrate, wobei die Lichtpulse eine im Vergleich zur inversen Repetitionsrate kurze Dauer aufweisen. Die Lichtlenkeinrichtung empfängt die Folge von Lichtpulsen und lenkt einen Anteil der Lichtintensität jedes Lichtpulses der Folge in den Raumbereich und einen weiteren Anteil der Lichtintensität jedes Lichtpulses als Referenzsignal zu dem wenigstens einen Referenzsignaldetektor. Die Detektoranordnung ist so eingerichtet, dass sie eine Mehrzahl von Lichtsignalen erfassen kann, die in dem Raumbereich in eine Mehrzahl unterschiedlicher Richtungen reflektiert und/oder gestreut werden. Wenn im Betrieb der Vorrichtung ein Objekt in dem Raumbereich angeordnet ist, beinhaltet die Mehrzahl von Lichtsignalen Licht, das von dem Objekt in dem Raumbereich durch Reflexion und/oder Streuung der in den Raumbereich gelenkten Folge von Lichtpulsen in mehrere Richtungen reflektiert und/oder gestreut wird. Unter Lichtsignalen mit unterschiedlicher Richtung werden dabei Lichtsignale verstanden, deren Wellenvektoren nicht parallel sind und/oder die ausgehend von beabstandeten Punkten reflektiert und/oder gestreut werden. Die Auswerteschaltung bestimmt eine Phasenverschiebung bzw. Phasendifferenz zwischen dem Referenzsignal und einem von der Detektoranordnung erfassten Lichtsignal. Zur Bestimmung der Phasendifferenz verwendet die Auswerteschaltung eine Signalkomponente des Lichtsignals mit einer Frequenz, die einem Vielfachen der Repetitionsrate entspricht.

Als Signalkomponente wird hierbei eine spektrale Komponente des Lichtsignals, d.h. der Lichtintensität als Funktion der Zeit, bezeichnet. Das Referenzsignal kann im Wesentlichen die Frequenz aufweisen, die dem Vielfachen der Repetitionsrate entspricht, oder das Referenzsignal kann eine Referenzsignalkomponente, d.h. eine spektrale Komponente, mit dieser Frequenz aufweisen, wobei die Phasendifferenz als Phasendifferenz zwischen der Signalkomponente und der Referenzsignalkomponente bestimmt werden kann.

Da die Phasendifferenz basierend auf einer Signalkomponente mit einer Frequenz bestimmt wird, die einer Oberwelle der Repetitionsrate entspricht, kann eine hohe Ortsauflösung erzielt werden, da die höhere Frequenz bei einem gegebenen Weglängenunterschied zwischen Lichtsignalpfad und Referenzsignalpfad zu einer größeren Phasendifferenz führt. Bei vorgegebener Phasenauflösung kann dadurch der Weglängenunterschied zwischen Lichtsignalpfad und Referenzsignalpfad, und somit die Position des Objekts, an dem das Lichtsignal reflektiert und/oder gestreut wurde, mit höherer Genauigkeit ermittelt werden. Da die Detektoranordnung eingerichtet ist, um Lichtsignale zu erfassen, die in dem Raumbereich mit unterschiedlichen Wellenvektoren oder von unterschiedlichen Ausgangspunkten aus reflektiert und/oder gestreut wurden, kann der Abstand des Objekts zu mehreren Referenzpunkten bestimmt werden. Basierend auf den so bestimmten mehreren Abständen kann, beispielsweise durch Trilateration, die Position des Objekts in dem Raumbereich ermittelt werden.

Die Auswerteschaltung ermittelt für jedes Lichtsignal der Mehrzahl von Lichtsignalen eine zugeordnete Phasendifferenz, wobei die Ermittlung der Phasendifferenz jeweils basierend auf einer Signalkomponente des entsprechenden Lichtsignals mit einer Frequenz erfolgt, die einem Vielfachen der Repetitionsrate entspricht. Basierend auf den der Mehrzahl von Lichtsignalen zugeordneten Phasendifferenzen wird dann die Position des Objekts bestimmt. Da die mehreren Phasendifferenzen jeweils basierend auf einer Signalkomponente bei einer Oberwelle der Repetitionsrate ermittelt werden, kann der Abstand zu mehreren Referenzpunkten mit höherer Genauigkeit ermittelt werden.

Die Mehrzahl von Lichtsignalen kann gleichzeitig von mehreren optischen Detektoren, beispielsweise Fotodetektoren, oder sequentiell von einem optischen Detektor erfasst werden. Es können auch mehrere optische Detektoren vorgesehen sein, von denen wenigstens einer Lichtsignale der Mehrzahl von Lichtsignalen sequentiell empfängt.

Die Detektoranordnung kann eine Mehrzahl von optischen Detektoren umfassen, die so angeordnet sind, dass sie jeweils ein Lichtsignal der Mehrzahl von Lichtsignalen erfassen können. Wenn die Folge von Lichtpulsen von einer Mehrzahl von Referenzpunkten aus in den Raumbereich eingestrahlt wird, kann ein optischer Detektor so angeordnet sein, dass er das von einem gegebenen Referenzpunkt aus in den Raumbereich eingestrahlte und von dem Objekt retroreflektierte Licht empfängt. So kann basierend auf dem von einem optischen Detektor erfassten Lichtsignal ein Abstand des Objekts relativ zu dem zugeordneten Referenzpunkt ermittelt und aus mehreren Abständen die Position des Objekts bestimmt werden.

Um Licht von mehreren Referenzpunkten aus in den Raumbereich zu lenken, kann die Lichtlenkeinrichtung mehrere Strahlteiler umfassen. Eine Mehrzahl von optischen Detektoren kann der Mehrzahl von Strahlteilern zugeordnet sein, wobei jeder optische Detektor die Folge von Lichtpulsen empfängt, die über den zugeordneten Strahlteiler in den Raumbereich gelenkt wurde und dort von dem Objekt beispielsweise retroreflektiert wurde. In diesem Fall dienen die Durchtrittspunkte eines von der Lichtquelle erzeugten Lichtstrahls durch die Strahlteiler als Referenzpunkte für die Positionsbestimmung. Die Mehrzahl von Strahlteilern kann wenigstens drei Strahlteiler beinhalten, die nicht auf einer Geraden angeordnet sind, so dass aus den drei ermittelten Abständen zu den Strahlteilern drei Koordinaten des Objekts ermittelt werden können, um das Objekt in dem Raumbereich zu lokalisieren.

Es kann auch ein optischer Detektor vorgesehen sein, der mehrere Lichtsignale aus dem Raumbereich sequentiell erfasst. Insbesondere falls verschiedene beabstandete Bereiche des Objekts sequentiell Licht reflektieren, kann auf diese Weise ein Abstand der verschiedenen Bereiche beispielsweise zu der Position, von der aus die Lichtpulse in den Raumbereich eingestrahlt werden, ermittelt werden. Bei bekannten Relativpositionen der Objektbereiche zueinander kann daraus die Ausrichtung, d.h. die Winkellage des Objekts in dem Raumbereich ermittelt werden, und/oder es kann die Lage eines Objektpunkts in dem Raumbereich ermittelt werden.

Um eine sequentielle Lichtreflexion an verschiedenen Bereichen des Objekts zu verwirklichen, kann die Vorrichtung einen an dem Objekt anzubringenden Strahlunterbrecher aufweisen, der sequentiell verschiedene Bereiche des Objekts abdeckt. Beispielsweise können an dem Objekt mehrere beabstandete Retroreflektoren mit bekannten Relativpositionen angebracht sein, von denen sequentiell nur einer von dem Strahlunterbrecher freigegeben wird.

Die Verwendung mehrerer optischer Detektoren kann mit der sequentiellen Detektion von Lichtsignalen durch einen oder mehrere der optischen Detektoren kombiniert werden. Dies ist insbesondere vorteilhaft, wenn eine große Anzahl von Koordinaten, beispielsweise zusätzlich zu den Koordinaten eines Objektpunkts auch drei seine Winkelausrichtung bestimmende Koordinaten, ermittelt werden sollen.

Es können auch mehrere Reflektoren mit wellenlängenselektiven Reflexionseigenschaften vorgesehen sein. Die Vorrichtung kann dann mehrere Lichtquellen zum Erzeugen von mehreren Folgen von Lichtpulsen, jeweils mit Licht unterschiedlicher Wellenlängen, aufweisen. Die Vorrichtung kann weiterhin mehrere Detektoren aufweisen, um die in unterschiedliche Richtungen reflektierten Lichtsignale zu erfassen. Es können dichroische Strahlteiler vorgesehen sein, die das von einem der Reflektoren reflektierte Lichtsignal selektiv zu einem dem Reflektor zugeordneten Detektor zu lenken.

Die Lichtlenkeinrichtung kann wenigstens einen Lichtaufweiter zum Aufweiten der in den Raumbereich zu lenkenden Folge von Lichtpulsen aufweisen. Durch die Aufweitung wird der Raumbereich vergrößert, in den die Lichtpulse gelenkt werden, so dass eine Positionsbestimmung in einem größeren Raumbereich möglich ist.

Um die Phasendifferenz für die Signalkomponente eines Lichtsignals zu bestimmen, mischt die Auswerteschaltung diese Signalkomponente in mehreren Stufen herunter. Das Heruntermischen erfolgt vorteilhaft derart, dass zwar die Frequenz der Signalkomponente verringert wird, die zu bestimmende Phasendifferenz durch das Heruntermischen jedoch im Wesentlichen unverändert bleibt. Dies kann erreicht werden, indem in der Auswerteschaltung ein Mischer vorgesehen ist, um die Signalkomponente des Lichtsignals und eine Referenzsignalkomponente des Referenzsignals zu mischen. Dabei weist vorteilhaft auch die Referenzsignalkomponente eine Frequenz auf, die ein Vielfaches der Repetitionsrate ist. Beispielsweise können sich die Frequenz der Signalkomponente und die Frequenz der Referenzsignalkomponente um eine der Repetitionsrate entsprechende Grundfrequenz unterscheiden, um die Signalkomponente auf die Grundfrequenz herunterzumischen.

Es können auch zwei Referenzsignaldetektoren zum Detektieren des Referenzsignals vorgesehen sein, wobei der Mischer eingangsseitig mit einem der zwei Referenzsignaldetektoren gekoppelt ist, um die Referenzsignalkomponente zu empfangen. Die Auswerteschaltung kann einen weiteren Mischer aufweisen, der eingangsseitig mit einem Ausgang des Mischers und mit einem weiteren Referenzsignaldetektor gekoppelt ist. Bei einer derartigen zweistufigen Mischeranordnung sind die Anforderungen an den Durchlassbereich von Bandpassfiltern, die zum Selektieren der Signalkomponente und der Referenzsignalkomponente verwendet werden, im Vergleich zu einer einstufigen Mischeranordnung verringert. Da mehrere Referenzsignaldetektoren zum Detektieren des Referenzsignals vorgesehen sind, können die Komponenten in den jeweiligen Signalverarbeitungspfaden der Auswerteschaltung spezifisch im Hinblick auf die in dem Signalverarbeitungspfad jeweils benötigten Referenzsignalkomponenten gewählt werden. Beispielsweise kann eine Eingangsverstärkung der von den zwei Referenzsignaldetektoren gelieferten Signale jeweils mit einem Verstärker vorgenommen werden, der spezifisch in Hinblick darauf ausgewählt wird, dass er in dem Frequenzbereich eine gute Leistungscharakteristik aufweist, in dem die Frequenz der Referenzsignalkomponente in dem jeweiligen Signalverarbeitungspfad liegt.

Das Bestimmen der Phasendifferenz durch die Auswerteschaltung kann iterativ so geschehen, dass für mehrere Signalkomponenten eines Lichtsignals mit unterschiedlicher Frequenz jeweils eine zugeordnete Phasendifferenz bestimmt wird. Dabei können mit zunehmender Anzahl von Iterationen Signalkomponenten mit zunehmend größeren Frequenzen gewählt werden, d.h. Signalkomponenten, die größerzahlige Vielfache der Repetitionsrate als Frequenz aufweisen. Auf diese Weise kann die Genauigkeit, mit der die Position des Objekts bestimmt wird, iterativ verbessert werden. Dies ist insbesondere dann vorteilhaft, wenn die Bestimmung der Position des Objekts voraussetzt, dass die Position des Objekts bereits mit einer bestimmten Genauigkeit vorbekannt ist.

Die Vorrichtung kann eine Sperreinrichtung aufweisen, um während eines Zeitintervalls, in dem kein in dem Raumbereich reflektierter und/oder gestreuter Lichtpuls auf die Detektoranordnung auftrifft, eine Erfassung und/oder Verarbeitung von Lichtsignalen zu verhindern. Die Sperreinrichtung kann beispielsweise in der Auswerteschaltung vorgesehene Schalter, beispielsweise Transistoren, umfassen, die einen Stromfluss in den Signalverarbeitungspfaden für die Detektoranordnung und/oder die Referenzsignaldetektoren unterbrechen, wenn kein Lichtpuls auf den jeweiligen Detektor auftrifft. Das Zeitintervall kann abhängig von der Repetitionsrate und den erwarteten minimalen und maximalen Signallaufzeiten eines Lichtpulses gewählt werden. Durch die Sperreinrichtung kann ein Signal/Rausch-Verhältnis verbessert werden.

Die Lichtquelle kann einen Kurzpulslaser umfassen, der beispielsweise elektrisch oder optisch gepumpt sein kann. Es kann jedoch auch jede andere geeignete Signalquelle verwendet werden, die in der Lage ist, mit hoher Genauigkeit ein optisches Signal auszugeben, das eine Grundfrequenz und stark ausgeprägte Oberwellen, d.h. hohe Harmonische der Grundfrequenz aufweist.

Die Vorrichtung kann in allen Anwendungsgebieten eingesetzt werden, in denen die Position eines Objekts in einem Raum bestimmt werden soll. Beispielsweise kann die Vorrichtung als industrielle Koordinatenmessmaschine oder als Vorrichtung zur Bestimmung einer Position eines Roboters ausgestaltet sein.

Eine Detektions- und Auswerteeinrichtung zum Bestimmen eines Abstands eines Objekts wird angegeben, die bei einer Vorrichtung nach einem Ausführungsbeispiel verwendbar ist. Diese Detektions- und Auswerteeinrichtung kann beispielsweise eingesetzt werden, um bei einer Vorrichtung zum Bestimmen einer Objektposition einen Abstand des Objekts zu einem von mehreren Referenzpunkten zu ermitteln, kann jedoch auch in anderen Anwendungen zur Messung von Abständen, insbesondere auch zur Abstandsbestimmung in einer Raumdimension, eingesetzt werden. Die Detektions- und Auswerteeinrichtung umfasst einen ersten Referenzsignaldetektor und einen zweiten Referenzsignaldetektor sowie eine Detektoranordnung und eine mit diesen gekoppelte Auswerteschaltung. Der erste und zweite Referenzsignaldetektor ist jeweils zum Empfangen eines Referenzsignals eingerichtet, das eine Folge von Lichtpulsen mit einer Repetitionsrate umfasst. Die Detektoranordnung ist zum Erfassen eines von dem Objekt reflektierten und/oder gestreuten Lichtsignals, das die Folge von Lichtpulsen mit einer zeitlichen Verschiebung umfasst, eingerichtet. Die Auswerteschaltung ist eingerichtet, um eine Phasendifferenz zwischen dem Referenzsignal und einer Signalkomponente des Lichtsignals zu bestimmen, die eine Frequenz aufweist, die einem Vielfachen der Repetitionsrate entspricht.

Da die Phasendifferenz einer Signalkomponente ermittelt wird, deren Frequenz einem Vielfachen der Grundfrequenz der Folge von Lichtpulsen entspricht, kann die Genauigkeit der Abstandsbestimmung bei vorgegebener Phasenauflösung verbessert werden, wie oben beschrieben wurde. Da nicht nur ein, sondern zwei Referenzsignaldetektoren vorgesehen sind, können die zugeordneten Signalverarbeitungspfade in der Auswerteschaltung spezifisch im Hinblick darauf gewählt werden, welche Frequenzkomponenten in den jeweiligen Signalverarbeitungspfaden benötigt werden.

Die Auswerteschaltung kann beispielsweise in einem mit dem ersten Referenzsignaldetektor gekoppelten ersten Signalpfad ein erstes Filter und in einem mit dem zweiten Referenzsignaldetektor gekoppelten zweiten Signalpfad ein zweites Filter aufweisen, wobei ein Durchlassbereich des ersten Filters von einem Durchlassbereich des zweiten Filters verschieden ist. In diesem Fall können weitere Komponenten in dem ersten und zweiten Signalverarbeitungspfad spezifisch im Hinblick auf den Durchlassbereich des ersten bzw. zweiten Filters gewählt werden. Beispielsweise ist es nicht erforderlich, dass eingangsseitige Verstärker in dem ersten und zweiten Signalpfad eine gute Leistungscharakteristik über den gesamten Spektralbereich aufweisen, der sowohl den ersten als auch den zweiten Durchlassbereich überdeckt.

Die Auswerteschaltung kann einen eingangsseitig mit der Detektoranordnung und dem ersten Referenzsignaldetektor gekoppelten ersten Mischer und einen zweiten Mischer umfassen, der eingangsseitig mit einem Ausgang des ersten Mischers und dem zweiten Referenzsignaldetektor gekoppelt ist. Auf diese Weise kann das von der Detektoranordnung detektierte Lichtsignal zweistufig auf eine niedrige Frequenz, beispielsweise die Grundfrequenz der Folge von Lichtpulsen, heruntergemischt werden. Dadurch wird die Verwendung von Bandpassfiltern in der Auswerteschaltung möglich, bei denen die Anforderungen an die Breite des Durchlassbereichs bei hohen Frequenzen im Vergleich zu einem einstufigen Heruntermischen weniger streng sind.

Nach einem weiteren Aspekt wird ein Verfahren zum Bestimmen einer Position eines Objekts in einem Raumbereich angegeben. Bei dem Verfahren wird eine Folge von Lichtpulsen mit einer Repetitionsrate in den Raumbereich eingestrahlt. Eine Mehrzahl von Lichtsignalen, die in dem Raumbereich von dem Objekt aufgrund von Reflexion und/oder Streuung der eingestrahlten Folge von Lichtpulsen in eine Mehrzahl unterschiedlicher Richtungen reflektiert und/oder gestreut werden, wird erfasst. Eine Phasendifferenz zwischen der eingestrahlten Folge von Lichtpulsen und einer Signalkomponente wenigstens eines erfassten Lichtsignals wird ermittelt. Dabei wird die Signalkomponente so gewählt, dass ihre Frequenz einem Vielfachen der Repetitionsrate entspricht.

Wie im Zusammenhang mit der Vorrichtung zum Bestimmen einer Position erläutert wurde, können mit diesem Verfahren die Abstände des Objekts zu mehreren Referenzpunkten und somit seine Position ermittelt werden. Da eine Signalkomponente mit einer Frequenz, die einem Vielfachen der Repetitionsrate entspricht, zum Bestimmen der Phasendifferenz verwendet wird, wird die Genauigkeit der Positionsbestimmung erhöht.

Um die Position des Objekts zu bestimmen, wird für jedes Lichtsignal der Mehrzahl von Lichtsignalen eine zugeordnete Phasendifferenz basierend auf einer Signalkomponente des entsprechenden Lichtsignals ermittelt werden, deren Frequenz einem Vielfachen der Repetitionsrate entspricht. Dabei können die Frequenzen der Signalkomponenten, die zur Bestimmung der Phasendifferenz verwendet werden, auch von Detektor zu Detektor unterschiedlich gewählt werden. Beispielsweise kann für das von einem ersten Detektor erfasste Lichtsignal eine Signalkomponente mit einer Frequenz ausgewertet werden, die ein erstes Vielfaches der Repetitionsrate ist, während für das von einem zweiten Detektor erfasste Lichtsignal eine Signalkomponente mit einer Frequenz ausgewertet wird, die ein zweites Vielfaches der Repetitionsrate ist, beispielsweise falls die Anforderungen an die Genauigkeit der Positionsbestimmung entlang verschiedener Koordinatenachsen unterschiedlich sind. Die Position des Objekts kann dann basierend auf den der Mehrzahl von Lichtsignalen zugeordneten Phasendifferenzen bestimmt werden.

Es können auch mehr Phasendifferenzen bestimmt werden als zur Berechnung der Position des Objekts, beispielsweise durch Trilateration, eigentlich erforderlich sind. Dies erlaubt es, ein überbestimmtes Gleichungssystem für die Position des Objekts aufzustellen, um die Genauigkeit der Positionsbestimmung zu erhöhen. Dabei können Methoden zum Einsatz kommen, wie sie beispielsweise aus der Positionsbestimmung bei dem Globalen Positionsbestimmungssystem (GPS) bekannt sind, um aus einer Mehrzahl von Abstandswerten zu einer Mehrzahl von Referenzpunkten die Position des Objekts zu bestimmen.

Die Folge von Lichtpulsen kann von einer Mehrzahl von Einstrahlpositionen aus in den Raumbereich eingestrahlt werden, die nicht auf einer Geraden angeordnet sind. Dabei müssen die Lichtpulse nicht an den Einstrahlpositionen erzeugt werden. Beispielsweise können die Lichtpulse an den Einstrahlpositionen empfangen und in den Raumbereich gelenkt werden. Eine derartige Geometrie erlaubt es, die Position eines Objektpunkts in dem Raumbereich zu ermitteln. Es kann jeweils ein optischer Detektor vorgesehen sein, um Licht zu empfangen, das von einer der Einstrahlpositionen aus in den Raumbereich eingestrahlt und dort von dem Objekt reflektiert und/oder gestreut wurde.

Wie im Zusammenhang mit der Vorrichtung zum Bestimmen einer Position bereits beschrieben wurde, kann die Mehrzahl von Lichtsignalen auch sequentiell erfasst werden. Die Erfassung der Mehrzahl von Lichtsignalen kann auch so erfolgen, dass zwar mehrere Detektoren zum Erfassen der Lichtsignale vorgesehen sind, aber an einem oder mehreren der Detektoren auch sequentiell Signale aus dem Raumbereich erfasst werden, die separat ausgewertet werden, um zusätzliche Informationen, beispielsweise über die Ausrichtung des Objekts, zu erhalten. Um sequentiell Signale von verschiedenen, voneinander beabstandeten Punkten an dem Objekt zu erhalten, kann ein steuerbarer Strahlunterbrecher an dem Objekt vorgesehen sein. Dieser kann beispielsweise selektiv nur einen von mehreren an dem Objekt angeordneten Retroreflektoren freigeben. Es können auch wellenlängenselektive Reflektoren eingesetzt werden.

Zum Bestimmen der Phasendifferenz der Signalkomponente zu einem Referenzsignal wird die Signalkomponente auf eine niedrigere Frequenz heruntergemischt, um die Bestimmung der Phasendifferenz auf einem niederfrequenten Signal durchführen zu können. Zum Heruntermischen kann die Signalkomponente beispielsweise mit einer Referenzsignalkomponente des Referenzsignals gemischt werden, deren Frequenz ebenfalls ein Vielfaches der Grundfrequenz der Folge von Lichtpulsen ist. Die Signalkomponente wird einem mehrstufigen Mischverfahren unterzogen, um sie auf eine niedrige Frequenz herunterzumischen.

Zur Positionsbestimmung kann für ein erfasstes Lichtsignal iterativ für mehrere Signalkomponenten mit zunehmender Frequenz eine zugehörige Phasendifferenz bestimmt werden. Auf diese Weise kann die Genauigkeit der Positionsbestimmung von Iteration zu Iteration erhöht werden. Wenigstens eine der mehreren Signalkomponenten weist eine Frequenz auf, die einem Vielfachen der Repetitionsrate entspricht.

Zur Verbesserung eines Signal/Rausch-Verhältnisses kann das Erfassen von Lichtsignalen und/oder eine weitere Signalverarbeitung der erfassten Lichtsignale in einem Zeitintervall unterdrückt werden, in dem kein Lichtpuls erfassbar ist. Das Zeitintervall wird basierend auf der Repetitionsrate und minimalen und maximalen erwarteten Signallaufzeiten bestimmt.

Das Verfahren kann mit einer Vorrichtung nach einem Ausführungsbeispiel der Erfindung durchgeführt werden.

Die Vorrichtungen und Verfahren nach verschiedenen Ausführungsbeispielen der Erfindung können allgemein zur Bestimmung von Objektpositionen in einem Raumbereich eingesetzt werden. Ein beispielhaftes Anwendungsfeld sind Messanwendungen in industriellen Anlagen, beispielsweise in automatisierten Fertigungs- oder Transportanlagen oder dergleichen. Jedoch sind die Ausführungsbeispiele der Erfindung nicht auf diese Anwendungen beschränkt.

Die Erfindung wird nachfolgend anhand von Ausführungsbeispielen unter Bezugnahme auf die beigefügte Zeichnung näher erläutert.

Fig. 1 ist eine schematische Darstellung einer Vorrichtung nach einem Ausführungsbeispiel.

Fig. 2A zeigt beispielhaft eine Folge von Lichtpulsen als Funktion der Zeit, und Fig. 2B zeigt schematisch ein Fourier-Spektrum der Folge von Lichtpulsen von Fig. 2A.

Fig. 3 zeigt eine Detektions- und Auswerteeinrichtung, die kein Ausführungsbeispiel ist.

Fig. 4A und 4B zeigen schematisch Signale, die in der Detektions- und Auswerteeinrichtung von Fig. 3 auftreten.

Fig. 5 zeigt eine Detektions- und Auswerteeinrichtung einer Vorrichtung nach einem Ausführungsbeispiel.

Fig. 6 veranschaulicht eine Bestimmung einer Position bei der Vorrichtung von Fig. 1.

Fig. 7 ist eine schematische Darstellung einer Vorrichtung nach einem weiteren Ausführungsbeispiel.

Fig. 8 veranschaulicht eine Bestimmung einer Position bei der Vorrichtung von Fig. 7.

Fig. 9A zeigt eine schematische Explosionsansicht und Fig. 9B eine Draufsicht einer Reflektoranordnung mit einem steuerbaren Strahlunterbrecher.

Fig. 10 ist eine schematische Darstellung einer Vorrichtung nach einem weiteren Ausführungsbeispiel.

Fig. 11 illustriert eine zeitabhängige Betätigung einer Sperreinrichtung bei der Vorrichtung von Fig. 7.

Fig. 12 ist eine Flussdiagrammdarstellung eines Verfahrens nach einem Ausführungsbeispiel.

Fig. 13 ist eine Flussdiagrammdarstellung eines Verfahrens nach einem weiteren Ausführungsbeispiel.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendungen, wie eine Positionsbestimmung in industriellen Einrichtungen, beschrieben werden, ist die vorliegende Erfindung nicht auf diese Anwendungen beschränkt.

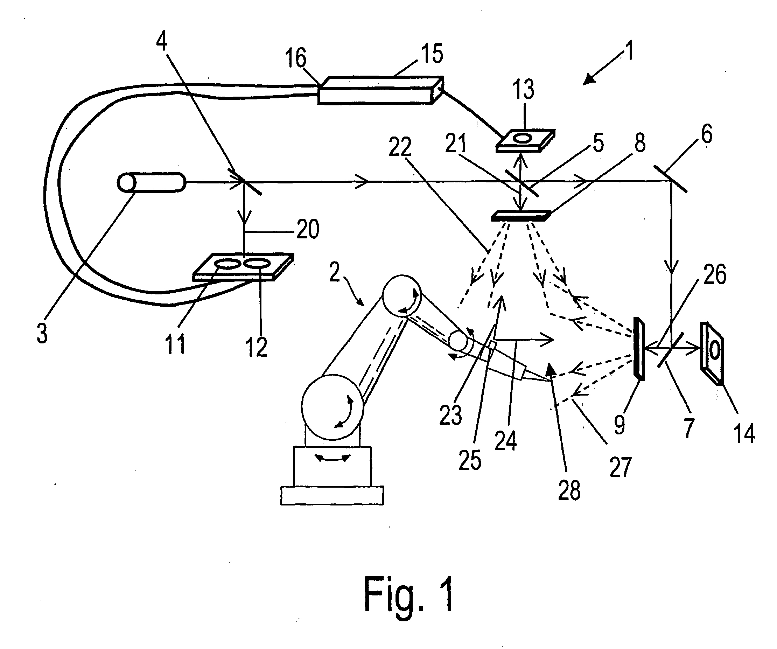

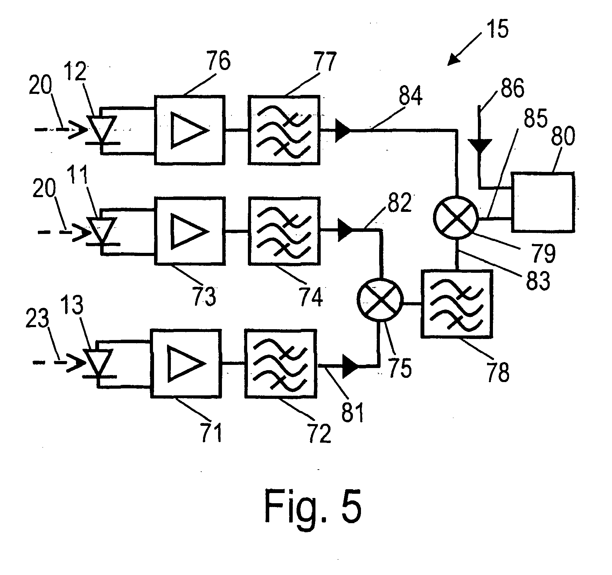

Fig. 1 ist eine schematische Darstellung einer Vorrichtung 1 zum Bestimmen einer Position eines Objekts, bei der eine Signalverarbeitung nach einem Ausführungsbeispiel eingesetzt werden kann, wie unter Bezugnahme auf Figur 5 näher beschrieben wird. Die Vorrichtung 1 ist im Kontext einer beispielhaften Anwendung dargestellt, bei der die Position einer Komponente eines Roboterarms 2, die mit einem Reflektor 25 versehen ist, ermittelt wird, kann aber ebenso in anderen Umgebungen und bei anderen Anwendungen eingesetzt werden.

Die Vorrichtung 1 umfasst eine Lichtquelle 3, die mit einer Repetitionsrate eine Folge kurzer Lichtpulse erzeugt, eine Lichtlenkeinrichtung, die durch eine Mehrzahl von optischen Elementen 4-9 ausgebildet ist, ein Paar von Referenzsignaldetektoren 11, 12 mit einem ersten Referenzsignaldetektor 11 und einem zweiten Referenzsignaldetektor 12, eine Detektoranordnung mit mehreren optischen Detektoren 13, 14 und eine Auswerteschaltung 15. Die Lichtlenkeinrichtung empfängt die Folge von Lichtpulsen und lenkt die Folge von Lichtpulsen zu dem Paar von Referenzsignaldetektoren 11, 12 und in einen allgemein mit 28 bezeichneten Raumbereich, in dem die Position des an dem Roboterarm 2 angebrachten Reflektors 25 bestimmt werden soll. Aus Gründen der Einfachheit wird nachfolgend das von der Lichtlenkeinrichtung zu den Referenzsignaldetektoren 11, 12 und in den Raumbereich 28 gelenkte Licht ebenfalls als die Folge von Lichtpulsen bezeichnet, wobei ersichtlich ist, dass jeweils nur ein Anteil der von der Lichtquelle 2 erzeugten Lichtpulsintensität zu den Referenzsignaldetektoren 11, 12 bzw. in den Raumbereich 28 gelenkt wird. Die Folge von Lichtpulsen wird in dem Raumbereich von dem an dem Roboterarm 2 angeordneten Reflektor 25 reflektiert. Die reflektierte Folge von Lichtpulsen wird von den Detektoren 13, 14 erfasst. Die Auswerteschaltung 15 ermittelt aus den Signalen von den Referenzsignaldetektoren 11, 12, die an einem Referenzsignaleingang 16 empfangen werden, und aus den Signalen von den Detektoren 13, 14 eine Phasenlage von Signalkomponenten der an den Detektoren 13, 14 erfassten Lichtsignale, die in einer Beziehung zur Laufzeit der Lichtpulse in dem Raumbereich 28 und somit zum Abstand des Reflektors 25 von verschiedenen Elementen der Lichtlenkeinrichtung steht. Auf diese Weise kann die Position des Reflektors 25 ermittelt werden. Wie noch ausführlicher erörtert wird, beruht die Ermittlung der Phasenlage durch die Auswerteschaltung 15 auf Signalkomponenten der an den Detektoren 13, 14 erfassten Lichtsignale, die eine Frequenz aufweisen, die ein Vielfaches der Repetitionsrate ist.

Die Detektoren 13, 14 und Referenzsignaldetektoren 11, 12 sind beispielsweise als Fotodetektoren ausgestaltet und erfassen die einfallende Lichtintensität.

Während in Fig. 1 aus Gründen der Übersichtlichkeit nur zwei Strahlteiler 5, 7, von denen aus Licht in den Raumbereich 28 gelenkt wird, und zwei diesen zugeordnete Detektoren 13, 14 dargestellt sind, kann Licht auch von mehr als zwei unterschiedlichen Positionen aus in den Raumbereich gelenkt werden, in dem die Position des Objekts bestimmt werden soll. Sollen alle drei räumlichen Koordinaten des Retroreflektors 25 bestimmt werden, kann die Folge von Lichtpulsen von wenigstens einer weiteren Einstrahlposition aus in den Raumbereich 28 gelenkt werden, die nicht auf einer Geraden angeordnet ist, die durch die Strahldurchtrittspunkte an den Strahlteilern 5 und 7 definiert ist.

Die Funktionsweise der verschiedenen Komponenten der Vorrichtung 1 wird nachfolgend näher erläutert.

Die Lichtquelle 3 erzeugt ein optisches Signal, das mit einer periodischen Funktion moduliert ist und das eine Grundfrequenz f0 sowie ausgeprägte Anteile von Oberwellen der Grundfrequenz f0, d.h. ausgeprägte Frequenzkomponenten mit Frequenzen aufweist, die Vielfache von f0 sind. Ein solches Signal wird beispielsweise durch einen Kurzpulslaser erzeugt, der eine Folge von Lichtpulsen in einem wohldefinierten zeitlichen Abstand T0=1/f0, d.h. mit einer Repetitionsrate f0, erzeugt, wobei die Dauer jedes Pulses kurz ist im Vergleich zum zeitlichen Abstand T0 zwischen aufeinanderfolgenden Pulsen.

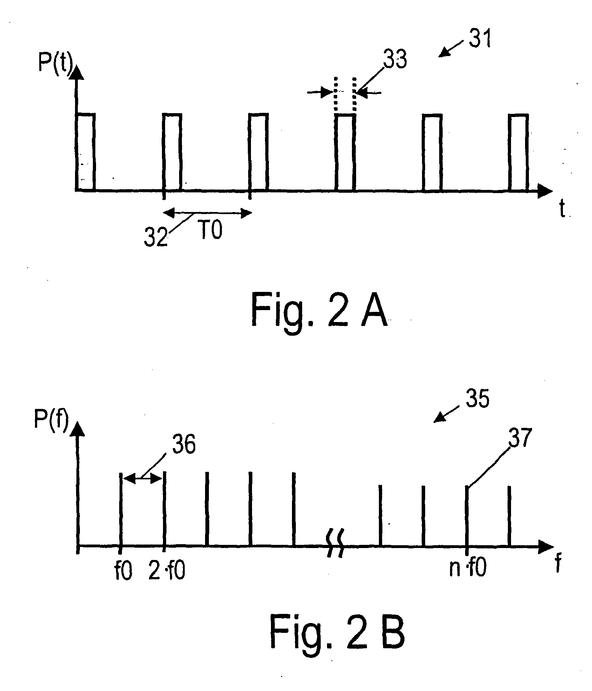

Fig. 2A zeigt beispielhaft eine derartige Folge kurzer Lichtpulse 31, wobei die Ausgangsleistung P der Lichtquelle 3 als Funktion der Zeit t dargestellt ist. Der Zeitabstand T0 zwischen aufeinanderfolgenden Pulsen ist mit dem Bezugszeichen 32 angedeutet, während die Dauer jedes Lichtpulses mit dem Bezugszeichen 33 angedeutet ist. Die Dauer jedes Lichtpulses kann im Vergleich zu dem Zeitabstand T0 zwischen aufeinanderfolgenden Lichtpulsen sehr klein sein, beispielsweise von der Größenordnung $1 \cdot 10^{-5}$. Bei der Vorrichtung 3 können die Repetitionsrate f0 und die Zeitdauer jedes Pulses geeignet in Abhängigkeit von einer gewünschten Messgenauigkeit bei der Ortsbestimmung, einer anfänglichen Unsicherheit über die Position des Objekts, und der Signalkomponente des an den Detektoren 13, 14 detektierten Lichtsignals, für die eine Phasenlage bestimmt werden soll, oder in Abhängigkeit von weiteren Faktoren gewählt werden. Soll zur Bestimmung der Phasendifferenz die n-te Oberwelle von f0 verwendet werden, werden die Dauer jedes Lichtpulses und der Zeitabstand T0 zwischen aufeinanderfolgenden Lichtpulsen so gewählt, dass die von der Lichtquelle 3 ausgegebene Folge von Lichtsignalen noch ein ausreichendes spektrales Gewicht bei der Frequenz n·f0 aufweist. Auch wenn in Fig. 2A beispielhaft eine Folge von Rechteckspulsen dargestellt ist, können ebenso andere geeignete Pulsformen gewählt werden, beispielsweise das Quadrat eines hyperbolischen Secans oder eine Gaussfunktion

Fig. 2B zeigt beispielhaft ein Frequenzspektrum 35 einer Folge von Lichtpulsen, die mit einer Repetitionsrate f0 erzeugt werden, wobei die Dauer jedes Lichtpulses kurz im Vergleich zu T0=1/f0 ist. Das Frequenzspektrum 35 weist eine Anzahl von Peaks mit einem konstanten Frequenzabstand f0 auf, der bei dem Bezugszeichen 36 schematisch angedeutet ist. Das spektrale Gewicht der einzelnen Peaks nimmt zu höheren Frequenzen hin ab, wobei die Stärke des Abfalls durch das Verhältnis von Zeitabstand zwischen aufeinanderfolgenden Lichtpulsen und Lichtpulsdauer bestimmt ist. Diese Größen sind bei der Lichtquelle 3 der Vorrichtung 1 so gewählt, dass das spektrale Gewicht der Frequenzkomponente 37 mit Frequenz n.f0, die zur Bestimmung von Phasenlagen verwendet wird, in der Folge von Lichtpulsen ausreichend hoch für die Durchführung von Phasenmessungen ist.

Eine Folge von Lichtpulsen, wie sie schematisch in Fig. 2 dargestellt ist, kann von verschiedenen Lasern erzeugt werden, die für die Erzeugung kurzer Lichtpulse eingerichtet sind. Insbesondere können optische Frequenzsynthesizer verwendet werden. Beispielsweise kann ein elektrisch gepumpter Diodenlaser, z.B. ein gütegeschalteter Laser, ein verstärkungsgeschalteter (gain switched) Laser, ein aktiv oder passiv modengekoppelter Laser oder ein Laser mit hybrider Modenkopplung, oder ein modengekoppelter oberflächenemittierender Laser mit vertikalem Resonator (Vertical-Cavity Surface Emitting Laser, VCSEL) als Lichtquelle 3 verwendet werden. Es kann auch ein optisch gepumpter Laser, beispielsweise ein passiv modengekoppelter oberflächenemittierender Laser mit externem vertikalen Resonator (Vertical External Cavity Surface Emitting Lasers, VECSEL) oder ein auf photonische-Kristallfasern basierender Laser (photonic-crystal-fiber laser) als Lichtquelle 3 verwendet werden. Beispielhafte Pulsdauern der Lichtquelle 3 liegen in einem Bereich von 100 fs und 100 ps. Beispielhafte Repetitionsraten liegen in einem Bereich von 50 MHz bis 50 GHz. Beispielhafte mittlere Leistungen liegen in einem Bereich von 1 mW bis 10 W. Beispielhafte Werte für den Pulsjitter liegen zwischen 10 fs und 1 ps Effektivwert (quadratischer Mittelwert).

Wie in Fig. 1 dargestellt, wird die von der Lichtquelle 3 ausgegebene Folge von Lichtpulsen von der Lichtlenkeinrichtung zu den Referenzsignaldetektoren 11, 12 und in den Raumbereich 28 gelenkt. Die Lichtlenkeinrichtung umfasst bei der Vorrichtung 1 mehrere Strahlteiler 4, 5 und 7, einen Spiegel 6 und Strahlaufweiter 8, 9, die den Strahlteilern 5 bzw. 7 zugeordnet sind. Der Strahlteiler 4 empfängt die Folge von Lichtpulsen von der Lichtquelle 3. Ein Teilstrahl 20 der Folge von Lichtpulsen wird von dem Strahlteiler 4 als Referenzsignal zu den Referenzsignaldetektoren 11, 12 gelenkt. Falls erforderlich, kann auch dem Strahlteiler 4 ein optisches Element zur Strahlaufteilung, insbesondere ein Strahlteiler, nachgeordnet sein um sicherzustellen, dass der Teilstrahl 20 sowohl auf den Referenzsignaldetektor 11 als auch auf den Referenzsignaldetektor 12 trifft. Ein weiterer Teilstrahl der Folge von Lichtpulsen wird von dem Strahlteiler 4 transmittiert und trifft auf den Strahlteiler 5. Der Strahlteiler 5 lenkt einen Teilstrahl 21 der Folge von Lichtpulsen über den Strahlaufweiter 8 in den Raumbereich 28, wobei der Strahlaufweiter 8 den Teilstrahl 21 zu einem Lichtkegel 22 aufweitet. Ein weiterer Teilstrahl wird von dem Strahlteiler 5 transmittiert und über den Spiegel 6 auf den Strahlteiler 7 gelenkt. Der Strahlteiler 7 lenkt einen Teilstrahl 26 der Folge von Lichtpulsen über den Strahlaufweiter 9 in den Raumbereich 28, wobei der Strahlaufweiter 9 den Teilstrahl 26 zu einem Lichtkegel 27 aufweitet. Ein von dem Strahlteiler 7 transmittierter Anteil des von dem Spiegel 6 empfangenen Lichtstrahls kann über einen in Fig. 1 nicht dargestellten weiteren Strahlteiler in Richtung des Raumbereichs 28 gelenkt werden. Der Raumbereich 28, in dem die Position des Objekts bestimmt werden kann, entspricht dem Überlappungsbereich der verschiedenen Lichtkegel 22, 27. Falls die Folge von Lichtpulsen von mehr als drei Positionen aus in Richtung des Raumbereichs gelenkt wird, in dem die Objektposition bestimmt werden soll, ist der Raumbereich, in dem eine Bestimmung der Objektposition möglich ist, die Vereinigung aller Überlappungsbereiche von wenigstens drei verschiedenen Lichtkegeln, die ausgehend von wenigstens drei Ausgangspunkten eingestrahlt werden, die nicht auf einer Geraden liegen.

Die über den Strahlteiler 5 und den Lichtaufweiter 8 in dem Lichtkegel 22 in den Raumbereich 28 gelenkte Folge von Lichtpulsen trifft auf den Retroreflektor 25 und wird von diesem zurück in Richtung des Lichtaufweiters 8 reflektiert. Das von dem Retroreflektor 25 zurück in Richtung des Lichtaufweiters 8 reflektierte Licht bildet ein erstes Lichtsignal 23, das über den Lichtaufweiter 8 und den Strahlteiler 5 auf den Detektor 13 gelenkt wird. Die über den Strahlteiler 7 und den Lichtaufweiter 9 in dem Lichtkegel 26 in den Raumbereich 28 gelenkte Folge von Lichtpulsen trifft auf den Retroreflektor 25 und wird von diesem zurück in Richtung des Lichtaufweiters 9 reflektiert. Das von dem Retroreflektor 25 zurück in Richtung des Lichtaufweiters 9 reflektierte Licht bildet ein zweites Lichtsignal 24, das über den Lichtaufweiter 9 und den Strahlteiler 7 auf den Detektor 14 gelenkt wird. Wenn der Retroreflektor 25 im Lichtkegel weiterer Kombinationen von Strahlteiler, Lichtaufweiter und Detektor angeordnet ist, werden von dem Retroreflektor 25 aus entsprechend weitere Lichtsignale reflektiert, die über den Lichtaufweiter und Strahlteiler auf den entsprechenden Detektor gelenkt werden.

Die die Folge von Lichtpulsen in den Raumbereich 28 lenkende Lichtlenkeinrichtung und die Detektoren 13, 14 der Detektoranordnung sind so angeordnet, dass das in Richtung des Detektors 13 reflektierte Lichtsignal 23 in eine andere Richtung reflektiert wird als das in Richtung des Detektors 14 reflektierte Lichtsignal 24.

Der an dem Roboterarm 2 vorgesehene Retroreflektor 25 kann beispielsweise als Eckwürfelreflektor (Corner Cube Reflector, CCR), als Tripelprisma oder als Katzenaugenreflektor (Cat-Eye) bzw. als Kugellinse (Ball Lens) ausgestaltet sein. Beim Eckwürfelreflektor und dem Tripelprisma wird das Licht parallel zu den einfallenden Strahlrichtungen zurückreflektiert. Ein divergentes Strahlenbündel bleibt divergent. Beim Katzenaugenreflektor bzw. bei der Kugellinse können diese Retroreflektoren für eine bestimmte Distanz so optimiert werden, dass das reflektierte Strahlenbündel im Wesentlichen in sich selbst zurückreflektiert wird, wodurch am Detektor ein höherer Signalpegel vorliegt.

Anstelle eines Retroreflektors kann auch ein kleines streuendes Element verwendet werden, das sich in seinem Streuverhalten deutlich von seiner Umgebung unterscheidet, um Licht von dem relevanten Objektpunkt zu den Detektoren hin zu streuen. Damit am Detektor ein nutzbares Signal vorliegt, das vom Rauschen der streuenden Umgebung unterscheidbar ist, sollte das kleine Element Licht stark streuen.

Die Lichtsignale 23 und 24 werden von den Detektoren 13 bzw. 14 erfasst. Die Detektoren 13, 14 und Referenzsignaldetektoren 11, 12 sind als Photoempfänger ausgestaltet. Die Detektoren 13 und 14 erfassen dabei die Lichtleistung der auf sie einfallenden Folge von Lichtpulsen, die über den dem Detektor 13 bzw. 14 jeweils zugeordneten Strahlteiler 5 bzw. 7 zu dem Retroreflektor 25 und von diesem zurück zu dem Detektor 13 bzw. 14 propagiert. Die unterschiedliche optische Weglänge eines Lichtpulses, um einerseits zu einem der Referenzsignaldetektoren 11, 12 und andererseits nach einer Reflexion an dem Retroreflektor 25 zu einem der Detektoren 13 bzw. 14 zu gelangen, führt zu einer Zeitverschiebung $\tau_1$ bzw. $\tau_2$ zwischen der Ankunft ein- und desselben Lichtpulses an einem der Detektoren 13 bzw. 14 und an den Referenzsignaldetektoren 11, 12, die gleich dem Unterschied in optischer Weglänge der Lichtpfade geteilt durch die Lichtgeschwindigkeit c ist. Da typischerweise nur ein geringer Anteil des in den Raumbereich 28 gelenkten Lichts von dem Retroreflektor 25 reflektiert wird, ist das Signal an den Detektoren 13, 14 gegenüber dem Referenzsignal an den Referenzsignaldetektoren 11, 12 abgeschwächt.

Die Weglängendifferenz beinhaltet einerseits Strecken, die von der Geometrie der Vorrichtung, insbesondere den Abständen zwischen den Strahlteilern 5, 7 und dem Strahlteiler 4 sowie den Abständen zwischen den Strahlteilern 4, 5, 7 und den Detektoren 13, 14 bzw. den Referenzsignaldetektoren 11, 12, jeweils entlang des Strahlengangs, abhängen, und andererseits eine Komponente, die für das an dem Detektor 13 erfasste Lichtsignal von der optischen Weglänge zwischen dem Strahlteiler 5 oder dem virtuellen Ausgangspunkt des Lichtkegels 22, und dem Retroreflektor 25 und für das an dem Detektor 14 erfasste Signal von der optischen Weglänge zwischen dem Strahlteiler 7 oder dem virtuellen Ausgangspunkt des Lichtkegels 27, und dem Retroreflektor 25 abhängt. Da bei bekannter Geometrie der Vorrichtung 1 der von der Vorrichtungsgeometrie abhängige Anteil der Weglängendifferenz bekannt ist, kann durch Messung der Zeitverschiebung $\tau_1$ zwischen dem Lichtsignal 23 am Detektor 13 und dem Referenzsignal 20 an den Referenzsignaldetektoren 11, 12 die von dem Lichtpuls zurückgelegte optische Weglänge zwischen dem Strahlteiler 5 und dem Retroreflektor 25 und somit der Abstand des Retroreflektors 25 von dem Strahldurchtrittspunkt des Strahlteilers 5 bzw. von dem virtuellen Ausgangspunkt des Lichtkegels 22 bestimmt werden. Ähnlich kann durch Messung der Zeitverschiebung $\tau_2$ zwischen dem Lichtsignal 24 am Detektor 14 und dem Referenzsignal 20 an den Referenzsignaldetektoren 11, 12 die von dem Lichtpuls zurückgelegte optische Weglänge zwischen dem Strahlteiler 7 und dem Retroreflektor 25 und somit der Abstand des Retroreflektors 25 von dem Strahldurchtrittspunkt des Strahlteilers 7 bzw. von dem virtuellen Ausgangspunkt des Lichtkegels 27 bestimmt werden.

Die Detektoren 13 und 14 sowie die Referenzsignaldetektoren 11, 12 sind mit der Auswerteschaltung 15 gekoppelt, die eine Phasendifferenz zwischen den Lichtsignalen 23, 24 und dem Referenzsignal 20 ermittelt. Wie nachfolgend näher erläutert wird, ermittelt die Auswerteschaltung 15 der Vorrichtung 1 die Phasendifferenz zwischen dem Lichtsignal 23, 24 und dem Referenzsignal 20 für eine Signalkomponente, deren Frequenz im Wesentlichen ein Vielfaches der Repetitionsrate ist.

Die an den Detektoren 13, 14 empfangene Folge von Lichtpulsen weist, wie unter Bezugnahme auf Fig. 2 für die von der Lichtquelle erzeugte Folge von Lichtpulsen erläutert, eine Vielzahl von Oberwellen auf, deren Frequenzen Vielfache der Repetitionsrate f0 sind:

$$f_i = i \cdot f0, \tag{1}$$

wobei i eine natürlich Zahl größer als 1 und f0 die Repetitionsrate der Lichtquelle 3 ist. Eine charakteristische Größe für Frequenzen, die noch ein signifikantes spektrales Gewicht in einer Fourier-Darstellung der von den Detektoren 13, 14 empfangenen Lichtleistung als Funktion der Zeit aufweisen, ist durch den Quotienten aus der Zeitdauer T0 zwischen aufeinanderfolgenden Lichtpulsen und der charakteristischen Zeitdauer eines Lichtpulses gegeben.

Nachfolgend wird die Signalverarbeitung beispielhaft nur für das von dem Detektor 13 erfasste Lichtsignal 23 näher erläutert. Die Erläuterungen gelten entsprechend auch für jedes andere Lichtsignal, das von dem Retroreflektor aus zu einem Detektor der Detektoranordnung propagiert.

Eine zeitliche Verschiebung $\tau$ zwischen dem Lichtsignal 23 und dem an den Referenzsignaldetektoren 11, 12 empfangenen Referenzsignal 20 führt dazu, dass eine Signalkomponente des an dem Detektor 13 empfangenen Signals, die eine Frequenz $f_i$ aufweist, relativ zu einer Referenzsignalkomponente des an den Referenzsignaldetektoren 11, 12 empfangenen Referenzsignals 20, die eine Frequenz $f_i$ aufweist, eine Phasenverschiebung von

$$\begin{aligned} \Delta\phi_i &= 2 \cdot \pi \cdot f_i \cdot \tau = 2 \cdot \pi \cdot i \cdot f0 \cdot \tau \tag{2a} \\ &= 2 \cdot \pi \cdot i \cdot f0 \cdot (d/c) \tag{2b} \end{aligned}$$

hat. Dabei bezeichnet d die Weglängendifferenz zwischen einem Lichtpfad, der von dem Strahlteiler 4 über den Retroreflektor 25 zu dem Detektor 13 verläuft, und einem Lichtpfad, der von dem Strahlteiler 4 zu den Referenzsignaldetektoren 11, 12 verläuft.

Wenn bereits ein Schätzwert dS für die Weglängendifferenz d bekannt ist, die diese mit einer Genauigkeit von c/(i·f0) annähert, so dass

$$|d - dS| < c / f_i = c/(i \cdot f0), \tag{3}$$

kann auf der Basis von dS der Anteil der Phasenverschiebung auf der rechten Seite von Gleichung (2a) bestimmt werden, der ein ganzzahliges Vielfaches von $2 \cdot \pi$ ist. Basierend auf dS wird eine ganze Zahl m ermittelt, so dass

$$d = d' + m \cdot c / f_i, \text{ wobei } |d'| < c / f_i. \tag{4}$$

Folglich ist

$$\begin{aligned} \Delta\phi_i' &= \Delta\phi_i - 2 \cdot \pi \cdot m \\ &= 2 \cdot \pi \cdot i \cdot f0 \cdot (d'/c) \tag{5} \end{aligned}$$

eine im Intervall von 0 bis $2 \cdot \pi$ liegende Größe, die durch Messung der Phasenlage zwischen einem Ausgangssignal des Detektors 13 und einem Ausgangssignal eines der Referenzsignaldetektoren 11, 12 bestimmt werden kann. Die Größe d', die dann gemäß

$$d' = c \cdot \Delta\phi_i' / (2 \cdot \pi \cdot i \cdot f0) \tag{6}$$

ermittelt werden kann, führt gemäß Gleichung (4) zu einem verbesserten Wert für den Weglängenunterschied d. Da sich die beiden Größen $\Delta\phi_i'$ und $\Delta\phi_i$ nur um ein für die Bestimmung der Phasendifferenz irrelevantes ganzzahliges Vielfaches von $2\cdot\pi$ unterscheiden, werden beide Größen nachfolgend als Phasendifferenz bezeichnet und nicht weiter unterschieden.

Da bei der Vorrichtung und dem Verfahren nach Ausführungsbeispielen der Erfindung i > 1, typischerweise i >> 1 gewählt wird, um die Phasendifferenz zu bestimmen, kann bei vorgegebener Messgenauigkeit für eine Phasendifferenz, im Folgenden als Phasenauflösung bezeichnet, die Messgenauigkeit für den Weglängenunterschied und somit die axiale Auflösung erhöht werden.

Zur Veranschaulichung wird angenommen, dass die Phasenauflösung $2\cdot\pi/1000$ beträgt und f0 = 100 MHz. Dann beträgt die axiale Auflösung 3 mm/i und nimmt mit zunehmender Frequenz der Signalkomponente, i, ab. Für i=700, wird beispielsweise eine axiale Auflösung von ungefähr 4,1 $\mu$m erreicht. Somit kann die axiale Auflösung vergrößert werden, indem die Phasendifferenz auf der Basis einer Signalkomponente des Lichtsignals 23 ermittelt wird, deren Frequenz ein, häufig großzahliges, Vielfaches der Repetitionsrate ist, d.h. deren Frequenz die Repetitionsrate multipliziert mit einem Faktor i>1 ist, wobei typischerweise i >> 1 gewählt wird. Die Signalkomponente, auf deren Basis die Phasendifferenz bestimmt wird, wird so gewählt, dass sie eine möglichst hohe Frequenz aufweist, bei der die Folge von Lichtpulsen noch ein ausreichendes spektrales Gewicht hat und die eine Signalverarbeitung durch die als Hochfrequenzschaltung ausgestalteten Bauteile der Auswerteschaltung 15 erlaubt.

Die Auswerteschaltung 15 kann die Phasendifferenz ermitteln, indem mehrere Oberwellen miteinander gemischt werden. Durch geeignete Wahl der Oberwellen und durch Mischen einer Signalkomponente des an dem Detektor 13 empfangenen Lichtsignals mit einer Referenzsignalkomponente des von den Referenzsignaldetektoren 11, 12 empfangenen Referenzsignals kann ein Mischprodukt erzeugt werden, das relativ niederfrequent ist, aber die Phasendifferenz der Oberwelle enthält. Dadurch erhält man an Stelle der ursprünglichen Anforderung, kurze Laufzeiten zu messen, die Möglichkeit, eine Phasenmessung bei tiefen Frequenzen vorzunehmen.

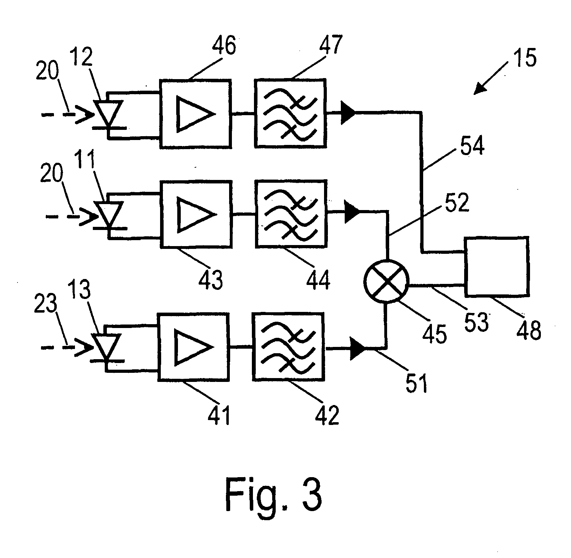

Fig. 3 zeigt ein schematisches Blockschaltbild einer Detektor- und Auswerteeinrichtung, die kein Ausführungsbeispiel der Ansprüche ist. Die Auswerteschaltung 15 der Vorrichtung 1 von Fig. 1 kann wie in Fig. 3 dargestellt ausgeführt sein. Jedoch kann die unter Bezugnahme auf Fig. 3 erläuterte Detektor- und Auswerteeinrichtung nicht nur zur Positionsbestimmung in einem dreidimensionalen Raum, sondern auch zur Entfernungsmessung, d.h. bei einer eindimensionalen Abstandsbestimmung verwendet werden. Auch stellt die in Fig. 3 dargestellte Ausgestaltung der Auswerteschaltung 15 nur eine von mehreren möglichen Ausgestaltung dar.

Auch wenn unter Bezugnahme auf Fig. 3 nur die Verarbeitung des Lichtsignals von dem Detektor 13 erläutert wird, können die Signale mehrerer Detektoren entsprechend verarbeitet werden, wobei eine entsprechend höhere Zahl von Signalverarbeitungspfaden vorgesehen wird. Zur Veranschaulichung sind der Detektor 13 und die Referenzsignaldetektoren 11, 12 in Fig. 3 ebenfalls dargestellt.

Die Auswerteschaltung 15 umfasst einen Signalverarbeitungspfad für ein von dem Detektor 13 ausgegebenes elektrisches Signal, das das von dem Detektor 13 erfasste Lichtsignal repräsentiert, mit einem eingangsseitigen Verstärker 41 und einem Bandpassfilter 42. Die Auswerteschaltung 15 umfasst weiterhin einen Signalverarbeitungspfad für ein von dem ersten Referenzsignaldetektor 11 ausgegebenes elektrisches Signal, das das von dem ersten Referenzsignaldetektor 11 erfasste Referenzsignal repräsentiert, mit einem eingangsseitigen Verstärker 43 und einem Bandpassfilter 44, und einen Signalverarbeitungspfad für ein von dem zweiten Referenzsignaldetektor 12 ausgegebenes elektrisches Signal, das das von dem zweiten Referenzsignaldetektor 12 erfasste Referenzsignal repräsentiert, mit einem eingangsseitigen Verstärker 46 und einem Bandpassfilter 47. Die Detektoren 11-14 können jeweils als Fotodetektoren ausgestaltet sein. Da die von den Detektoren bzw. Referenzsignaldetektoren ausgegebenen Signale die auf sie einfallenden optischen Signale repräsentieren und die Lichtintensität als Funktion der Zeit wiederspiegeln, werden die von den Detektoren bzw. Referenzsignaldetektoren ausgegebenen Signale ebenso bezeichnet wie die erfassten optischen Signale, d.h. als erfasstes "Lichtsignal" bzw. "Referenzsignal", wobei die von der Auswerteschaltung verarbeiteten Signale elektrische Signale sind.

Das Bandpassfilter 42 ist so eingerichtet, dass eine Signalkomponente des von dem Detektor 13 erfassten Lichtsignals mit einer Frequenz von n·f0 durchgelassen wird, wobei n eine natürliche Zahl größer als 1 ist. Wie oben beschrieben, wird n vorteilhaft möglichst groß gewählt, um die axiale Auflösung zu verbessern. Vorteilhaft weist das Bandpassfilter 42 einen Durchlassbereich auf, der so gewählt ist, dass die Übertragung von Signalkomponenten mit Frequenzen von (n+1)·f0 und (n-1)·f0 durch das Filter im Vergleich zur Übertragung der Signalkomponente mit der Frequenz n·f0 deutlich abgeschwächt ist. Dazu kann das Bandpassfilter 42 einen Durchlassbereich mit einer Breite aufweisen, die kleiner als f0 ist.

Das Bandpassfilter 44 ist so eingerichtet, dass eine Referenzsignalkomponente des von dem ersten Referenzsignaldetektor 11 erfassten Referenzsignals mit einer Frequenz von k·f0 durchgelassen wird, wobei k eine natürliche Zahl ist. Beispielsweise kann k = n-1 gewählt werden, so dass das Bandpassfilter 44 eine Referenzsignalkomponente mit der Frequenz (n-1)·f0 durchlässt. Vorteilhaft weist das Bandpassfilter 44 einen Durchlassbereich auf, der so gewählt ist, dass die Übertragung von Referenzsignalkomponenten mit Frequenzen von (k+1)·f0 und (k-1)·f0 im Vergleich zur Übertragung der Referenzsignalkomponente mit der Frequenz k·f0 deutlich abgeschwächt ist. Dazu kann das Bandpassfilter 44 einen Durchlassbereich mit einer Breite aufweisen, die kleiner als f0 ist.

Ein Mischer 45 ist eingangsseitig mit den Bandpassfiltern 42 und 44 gekoppelt, um die Signalkomponente 51 des Lichtsignals und die Referenzsignalkomponente 52 des Referenzsignals zu empfangen. Das Ergebnis der Frequenzmischung,

$$\cos (n \cdot f0 \cdot t + \Delta\phi_n) \cdot \cos ((n-1) \cdot f0 \cdot t) = [\cos (f0 \cdot t + \Delta\phi_n) + \cos ((2 \cdot n-1) \cdot f0 \cdot t + \Delta\phi_n)]/2, \tag{7}$$

weist eine niederfrequente Komponente mit der Frequenz f0, die der Grundfrequenz des von der Lichtquelle 3 erzeugten Signals entspricht, und eine hochfrequente Komponente auf.

Obwohl die Signalkomponente des Lichtsignals auf die Grundfrequenz f0 heruntergemischt wird, ist die Phase $\Delta\phi_n$ im Argument der niederfrequenten Komponente in Gleichung (7) durch Gleichung (2) bestimmt, entspricht also der Phasendifferenz für die Signalkomponente des Lichtsignals mit der Frequenz n·f0. Die niederfrequente Komponente wird als Signal 53 an einen Phasenauswerter 48 bereitgestellt, dessen zweiter Eingang mit dem Bandpassfilter 47 gekoppelt ist.

Das Bandpassfilter 47 ist so eingerichtet, dass eine Referenzsignalkomponente des von dem zweiten Referenzsignaldetektor 12 erfassten Referenzsignals mit einer Frequenz von f0 durchgelassen wird. Vorteilhaft weist das Bandpassfilter 47 einen Durchlassbereich auf, der so gewählt ist, dass die Übertragung von Referenzsignalkomponenten mit Frequenzen von 0·f0 und 2·f0 im Vergleich zur Übertragung der Referenzsignalkomponente mit der Frequenz f0 deutlich abgeschwächt ist. Dazu kann das Bandpassfilter 47 einen Durchlassbereich mit einer Breite aufweisen, die kleiner als f0 ist. Die resultierende Referenzsignalkomponente mit der Frequenz f0 wird als Signal 54 an den Phasenauswerter 48 bereitgestellt.

Der Phasenauswerter 48 bestimmt die Phasendifferenz $\Delta\phi_n$ zwischen dem Signal 53 und dem Signal 54. Da die Signalkomponente des Lichtsignals mit Frequenz n·f0 zu der Frequenz f0 heruntergemischt wurde, kann die Phasenmessung bei tiefen Frequenzen erfolgen.

Da das Signal 54 mithilfe des zweiten Referenzsignaldetektors 12 direkt optisch aufgenommen und nicht aus dem Signal erzeugt wird, das der erste Referenzsignaldetektor 11 aufnimmt, können die Verstärker 43 und 46 in den Signalverarbeitungspfaden für die beiden Referenzsignaldetektoren 11, 12 gezielt ausgewählt werden. Beispielsweise kann der Verstärker 46 so gewählt werden, dass er bei der Frequenz f0 eine gute Leistungscharakteristik aufweist, während der Verstärker 43 so gewählt werden kann, dass er bei der Frequenz (n-1)·f0 eine gute Leistungscharakteristik aufweist

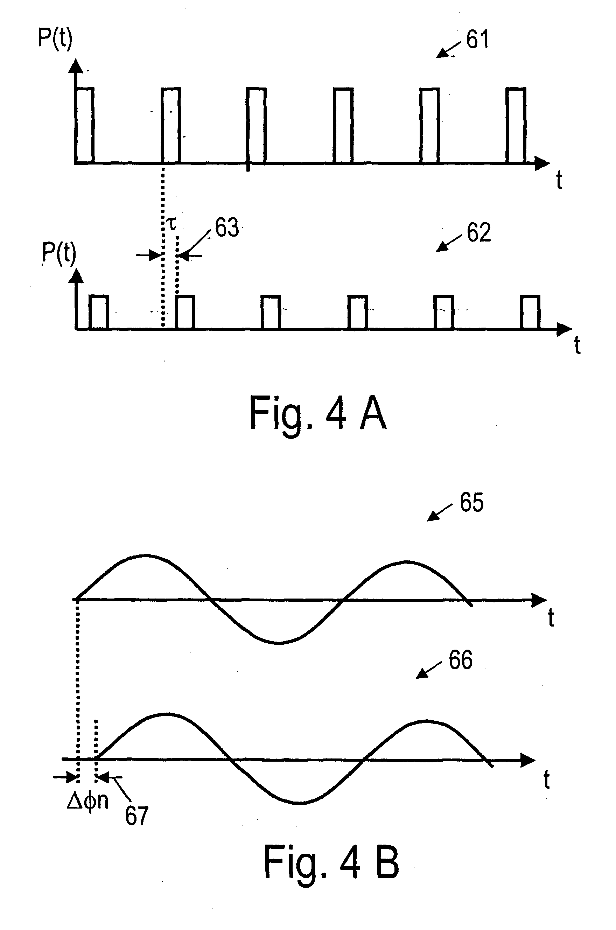

Fig. 4 illustriert verschiedene bei der Detektions- und Auswerteeinrichtung von Fig. 3 auftretende Signale.

Fig. 4A zeigt ein beispielhaftes Referenzsignal 61 und ein beispielhaftes Lichtsignal 62, wobei die von den Detektoren 11, 12 bzw. 13 empfangene Lichtleistung als Funktion der Zeit dargestellt ist. Das Lichtsignal 62 an dem Detektor 13 weist eine bei 63 dargestellte Zeitverschiebung τ gegenüber dem Referenzsignal 61 auf.

Fig. 4B zeigt beispielhafte Signale, wie sie an den Eingängen des Phasenauswerters 48 typischerweise auftreten können. Bei 65 ist die aus dem Referenzsignal abgeleitete Grundschwingung mit der Frequenz f0 als Funktion der Zeit dargestellt, während bei 66 das durch Heruntermischen der Signalkomponente des von dem Detektor 13 erfassten Lichtsignals auf die Frequenz f0 erzeugte Signal als Funktion der Zeit dargestellt ist, das ebenfalls die Frequenz f0 aufweist, aber um die Phase $\Delta\phi_n$ relativ zu der aus dem Referenzsignal abgeleiteten Grundschwingung phasenverschoben ist. Die Phasendifferenz $\Delta\phi_n$ wird von dem Phasenauswerter 48 auf eine geeignete Weise ermittelt, beispielsweise durch eine Analog-Digital-Wandlung der Signale und anschließendes Anfitten der Phasendifferenz.

Fig. 5 zeigt ein schematisches Blockschaltbild einer Detektor- und Auswerteeinrichtung, die bei einer Vorrichtung nach einem Ausführungsbeispiel verwendet werden kann. Die Auswerteschaltung 15 der Vorrichtung 1 von Fig. 1 kann wie in Fig. 5 dargestellt ausgeführt sein. Jedoch kann die unter Bezugnahme auf Fig. 5 erläuterte Detektor- und Auswerteeinrichtung nicht nur zur Positionsbestimmung in einem dreidimensionalen Raum, sondern auch zur Entfernungsmessung, d.h. bei einer eindimensionalen Abstandsbestimmung verwendet werden. Auch stellt die in Fig. 5 dargestellte Ausgestaltung der Auswerteschaltung 15 nur eine von mehreren möglichen Ausgestaltungen dar.

Auch wenn unter Bezugnahme auf Fig. 5 nur die Verarbeitung des Lichtsignals von dem Detektor 13 erläutert wird, können die Signale mehrerer Detektoren entsprechend verarbeitet werden, wobei eine entsprechend höhere Zahl von Signalverarbeitungspfaden vorgesehen wird. Zur Veranschaulichung sind der Detektor 13 und die Referenzsignaldetektoren 11, 12 in Fig. 5 ebenfalls dargestellt.

Die Auswerteschaltung 15 weist Eingangsverstärker 71, 73, 76 in Signalverarbeitungspfaden auf, die dem Detektor 13 und den Referenzsignaldetektoren 11 und 12 zugeordnet sind. Jeder der Signalverarbeitungspfade weist weiterhin ein Bandpassfilter 72, 74 bzw. 77 auf.

Das Bandpassfilter 72 ist so eingerichtet, dass eine Signalkomponente des von dem Detektor 13 erfassten Lichtsignals mit einer Frequenz von $n \cdot f0$ durchgelassen wird, wobei n eine natürliche Zahl größer als 1 ist. Wie oben beschrieben, wird n vorteilhaft möglichst groß gewählt, um die axiale Auflösung zu verbessern. Das Bandpassfilter 74 ist so eingerichtet, dass eine Referenzsignalkomponente des von dem ersten Referenzsignaldetektor 11 erfassten Referenzsignals mit einer Frequenz von $k \cdot f0$ durchgelassen wird, wobei k eine natürliche Zahl ist, die so gewählt ist, dass $|n-k| > 1$. Das Bandpassfilter 77 ist so eingerichtet, dass eine Referenzsignalkomponente des von dem zweiten Referenzsignaldetektor 12 erfassten Referenzsignals mit einer Frequenz von $(|n-k|-1) \cdot f0$ oder $(|n-k|+1) \cdot f0$ durchgelassen wird.

Die durch das Bandpassfilter 72 bzw. 74 durchgeführte Signalkomponente 81 bzw. Referenzsignalkomponente 82 werden von einem Mischer 75 gemischt. Falls jedes der Bandpassfilter 72, 74 und 77 einen ausreichend schmalen Durchlassbereich mit einer Breite kleiner als f0 aufweist, weist das resultierende Signal eine Komponente mit einer Frequenz von $|n-k| \cdot f0$ und eine weitere, höherfrequente Komponente mit einer Frequenz von $(n+k) \cdot f0$ auf, die durch ein dem Mischer 75 nachgeordnetes Bandpassfilter 78 entfernt wird. Durch den Mischer 75 wird die Phasenverschiebung $\Delta\phi_n$ des von dem Detektor 13 erfassten Lichtsignals somit auf ein Signal mit einer Frequenz in einen Zwischenfrequenzbereich bei der Frequenz $|n-k| \cdot f0$ übertragen. Das Signal 83 in dem Zwischenfrequenzbereich wird an einen weiteren Mischer 79 bereitgestellt, dessen zweiter Eingang von dem Bandpassfilter 77 ein Signal 84 empfängt, das die Referenzsignalkomponente des Referenzsignals mit einer Frequenz von beispielsweise $(|n-k|-1) \cdot f0$ ist. Durch Mischen der Signale 83 und 84 wird, ähnlich wie oben unter Bezugnahme auf Gleichung (7) erläutert, ein Signal 85 erzeugt, das eine mit der Grundfrequenz f0 oszillierende Komponente mit einer Phasenverschiebung von $\Delta\phi_n$ aufweist. Eine von dem Mischer 85 ebenfalls erzeugte Hochfrequenzkomponente kann gegebenenfalls durch ein weiteres Filter entfernt werden.

Wenn, wie in Fig. 5 dargestellt, die Signalkomponente des von dem Detektor 13 erfassten Lichtsignals zunächst auf eine Zwischenfrequenz heruntergemischt wird, ist es jedoch nicht erforderlich, dass die Bandpassfilter 72, 74 einen Durchlassbereich aufweisen, in dem nur eine Vielfache der Grundfrequenz f0 liegt. Ein Zwischensignal mit einer Komponente, die eine Frequenz von $|n-k| \cdot f0$ und im Wesentlichen eine Phasenverschiebung von etwa $\Delta\phi_n$ aufweist, wird von dem Mischer 75 auch dann erzeugt, wenn das Bandpassfilter 72 und/oder das Bandpassfilter 74 jeweils mehrere Vielfache der Grundfrequenz f0 durchlassen, also einen Abschnitt des Frequenzkamms und nicht nur eine einzige Oberwelle durchlassen. Da die Phasenlage der Signalkomponenten des von dem Detektor 13 erfassten Lichtsignals mit der Frequenz $i \cdot f0$ gemäß Gleichung (5) linear mit i zunimmt, ist das Bandpassfilter 72 bevorzugt so eingerichtet, dass die Anzahl von Oberwellen im Durchlassbereich des Bandpassfilters 72 klein im Vergleich zu n ist, damit die Variation der Phase mit der Oberwelle vernachlässigbar bleibt.

Vorteilhaft sind die Bandpassfilter 72 und 74 so eingerichtet, dass ihre Durchlassbereiche nicht überlappen. In diesem Fall kann aus der Komponente des von dem Mischer 75 ausgegebenen Zwischensignals, die eine Frequenz von $|n-k| \cdot f0$ aufweist, die Phasenverschiebung $\Delta\phi_n$ selbst dann ermittelt werden, wenn die Frequenzcharakteristik der Bandpassfilter 72 und 74 und somit das spektrale Gewicht der einzelnen Oberwellen in den Signalen 81 und 82 nicht bekannt ist.

Falls beispielsweise f0 = 100 MHz, n = 700 und k = 600, und weiterhin der Durchlassbereich des Bandpassfilters 72 das Frequenzintervall von 69,9 GHz bis 70,1 GHz überdeckt, so dass Signalkomponenten des von dem Detektor 13 erfassten Lichtsignals mit Frequenzen 69,9 GHz, 70,0 GHz und 70,1 GHz durchgelassen werden, und der Durchlassbereich des Bandpassfilters 74 das Frequenzintervall von 59,9 GHz bis 60,1 GHz überdeckt, so dass Signalkomponenten des von dem ersten Referenzsignaldetektor 11 erfassten Referenzsignals mit Frequenzen 59,9 GHz, 60,0 GHz und 60,1 GHz durchgelassen werden, weist das von dem Mischer 75 ausgegebene Zwischensignal eine Komponente auf, die eine Frequenz von $|n-k| \cdot f0$ und eine Phasenverschiebung von im Wesentlichen $\Delta\phi_n$ hat.

Somit sind die Anforderungen an die Breite des Durchlassbereichs der Bandpassfilter 72, 74, der bei höheren Frequenzen als der Durchlassbereich der Bandpassfilter 77 und 78 liegt, bei der mehrstufigen Übertragung der Phasendifferenz des von dem Detektor 13 erfassten Lichtsignals mit Frequenz $n \cdot f0$ auf ein Signal mit niedriger Frequenz über einen Zwischenfrequenzbereich weniger streng als bei einem einstufigen Mischvorgang, da der Durchlassbereich der Bandpassfilter mehrere Oberwellen $i \cdot f0$ durchlassen kann. Da der Durchlassbereich der Bandpassfilter 77 und 78 bei niedrigeren Frequenzen liegt, bei dem vorgenannten Beispiel mit f0 = 100 MHz, n = 700 und k = 600 bei 10,0 GHz für das Bandpassfilter 78 und bei 9,9 GHz für das Bandpassfilter 77, können diese Bandpassfilter 77, 78 leichter so ausgestaltet werden, dass sie einen schmalen Durchlassbereich aufweisen, als die Bandpassfilter 72, 74 mit einem Durchlassbereich bei höheren Frequenzen von beispielsweise 60 oder 70 GHz.

Der weitere Mischer 79 ist ausgangsseitig mit einem Phasenauswerter 80 gekoppelt, dessen zweiter Eingang ein mit der Grundfrequenz f0 oszillierendes Signal 86 empfängt. Das Signal 86 kann beispielsweise von einem Synchronausgang der Lichtquelle 3 der Vorrichtung 1 in Fig. 1 bereitgestellt werden. Alternativ kann das Signal 86 auch unter Verwendung eines Filters erzeugt werden, das das von dem zweiten oder ersten Referenzsignaldetektor erfassten Referenzsignal empfängt und die Referenzsignalkomponente mit der Frequenz f0 durchlässt, wie dies in Fig. 3 dargestellt ist.

Wie unter Bezugnahme auf Fig. 1-5 erläutert, kann bei der Vorrichtung 1 von Fig. 1 über die Phasenverschiebung einer Oberwelle des Lichtsignals der Abstand eines Objekts zu einer Mehrzahl von Referenzpunkten bestimmt werden. Bei der Vorrichtung 1 von Fig. 1 sind die Referenzpunkte durch die virtuellen Ausgangspunkte der Lichtkegel 22 und 27 gegeben.

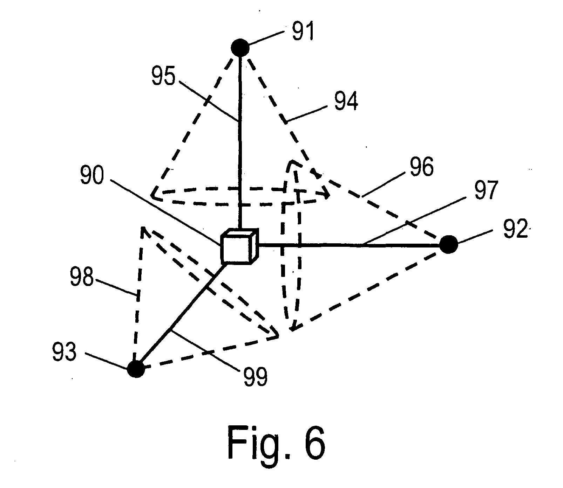

Fig. 6 veranschaulicht die Bestimmung der Position eines Objekts basierend auf Abständen zu einer Mehrzahl von Referenzpunkten.

Das Objekt 90 befindet sich im Überlappungsbereich mehrerer Lichtkegel 94, 96, 98, die ausgehend von bekannten Referenzpunkten 91, 92 und 93 in den Raumbereich eingestrahlt werden, in dem das Objekt 90 angeordnet ist. Auf die oben unter Bezugnahme auf Fig. 1-5 beschriebene Weise werden Abstände 95, 97 und 99 des Objekts 90 zu jedem der bekannten Referenzpunkte 91, 92 und 93 ermittelt. Durch Trilateration kann dann, beispielsweise unter Verwendung von Algorithmen, wie sie beim Globalen Positionsbestimmungssystem GPS eingesetzt werden, die Position des Objekts 90 relativ zu den Referenzpunkten 91, 92 und 93 und somit, durch eine geeignete Koordinatentransformation, in einem beliebigen Koordinatensystem ermittelt werden. Auch wenn in Fig. 6 schematisch nur drei Referenzpunkte dargestellt sind, kann durch Verwendung weiterer Detektoren bzw. Referenzpunkte die Genauigkeit der Positionsbestimmung erhöht werden. Die Verwendung von mehr als drei Detektoren kann auch bei nicht kooperativen Oberflächen vorteilhaft sein, die beispielsweise schmale Streukegel aufweisen, und/oder wenn Abschattungen in dem Raumbereich erwartet werden.

Bei der Vorrichtung 1 von Fig. 1 kann die Berechnung der Position des Objekts durch die Auswerteschaltung 15 oder eine separate Recheneinheit erfolgen.

Während zur Messung der Abstände 95, 97 und 99 des Objekts 90 zu jedem der bekannten Referenzpunkte 91, 92 und 93 jeweils dieselbe Oberwelle der Folge von Lichtpulsen verwendet werden kann, kann die Abstandsmessung zu unterschiedlichen Referenzpunkten 91, 92 und 93 auch auf der Basis unterschiedlicher Oberwellen und somit mit unterschiedlicher Genauigkeit erfolgen. Beispielhaft kann dies in Anwendungen erfolgen, bei denen ein Objekt in einer von drei räumlichen Richtungen nur eine von mehreren diskreten Positionen einnehmen kann und nur eine Kenntnis erforderlich ist, in welcher der diskreten Positionen sich das Objekt befindet.

Während unter Bezugnahme auf Fig. 1-6 die Bestimmung einer Objektposition mit einer Vorrichtung und einem Verfahren beschrieben wurde, bei der bzw. dem ein Retroreflektor eine Folge von Lichtpulsen, die von mehreren Referenzpunkten aus in den Raumbereich gelenkt wurden, in mehrere unterschiedliche Richtungen reflektiert, kann eine Positionsbestimmung auch dadurch erfolgen, dass mehrere an dem Objekt vorgesehene Retroreflektoren eine Folge von Lichtpulsen reflektieren, wie nachfolgend näher erläutert wird. Dabei ist es nicht erforderlich, aber immer noch möglich, Licht von mehreren Referenzpunkten aus in den Raumbereich zu lenken.

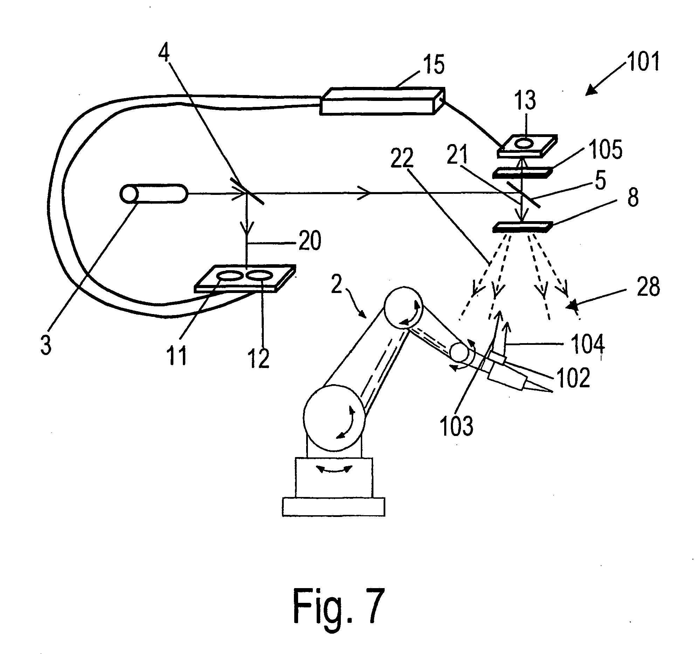

Fig. 7 zeigt eine Vorrichtung 101 zum Bestimmen einer Position eines Objekts. In Fig. 7 sind Komponenten, die mit unter Bezugnahme auf Fig. 1 erläuterten Komponenten identisch sind und dieselbe Funktionsweise aufweisen, mit demselben Bezugszeichen bezeichnet. Nach Ausführungsbeispielen kann die Bestimmung der Phasenlage wie unter Bezugnahme auf Figur 5 beschrieben erfolgen. Nachfolgend werden nur die Unterschiede der Vorrichtung 101 zur Vorrichtung 1 näher erläutert.

Bei der Vorrichtung 101 weist eine Lichtlenkeinrichtung einen Strahlteiler 4, einen Strahlteiler 5 und einen Lichtaufweiter 8 auf. Über den Strahlteiler 5 und den Lichtaufweiter 8 wird eine von der Signalquelle 3 erzeugte Folge von Lichtpulsen in einem Lichtkegel 22 in einen Raumbereich 28 eingestrahlt, in dem die Position eines Objekts bestimmt werden soll.

An dem Roboterarm 2 ist ein Positionierungselement 102 vorgesehen, das eine Mehrzahl von beabstandeten Retroreflektoren mit bekannten Relativpositionen zueinander aufweist. Die mehreren Retroreflektoren reflektierten die in dem Lichtkegel 22 eingestrahlte Folge von Lichtpulsen als Lichtsignale 103 bzw. 104 zurück in Richtung des Strahlteilers 4. Die Lichtsignale 103 bzw. 104 werden von dem Detektor 13 erfasst. Wie oben unter Bezugnahme auf Fig. 1-5 erläutert, kann der Abstand der verschiedenen Retroreflektoren des Positionierungselements 102 zu dem Strahldurchtrittspunkt des Strahlteilers 5 oder dem virtuellen Ausgangspunkt des Lichtkegels 22 bestimmt werden, indem die Auswerteschaltung 15 eine Phasendifferenz zwischen Signalkomponenten der Lichtsignale 103 bzw. 104 und einem zu Referenzsignaldetektoren 11, 12 gelenkten Referenzsignal 20 ermittelt. Die Ermittlung der Phasendifferenz erfolgt dabei wiederum unter Verwendung von Signalkomponenten, deren Frequenz einer Oberwelle der eingestrahlten Folge von Lichtpulsen mit einer Frequenz $n \cdot f_0$ entspricht.

Da die mehreren Retroreflektoren beabstandet sind, werden die Lichtsignale 103 bzw. 104, die von den entsprechenden Retroreflektoren des Positionierungselements 102 zu dem Detektor 13 reflektiert werden, in unterschiedlichen Richtungen, d.h. mit unterschiedlichen Wellenvektoren, reflektiert und legen im Allgemeinen unterschiedliche optische Weglängen zurück, die durch die unterschiedlichen Abstände der Retroreflektoren zu dem Strahldurchtrittspunkt des Strahlteilers 5 bedingt sind. Diese Abstände der mehreren Retroreflektoren zu einem Referenzpunkt sind aus den von der Auswerteschaltung 15 ermittelten Phasendifferenzen bestimmbar. Aus den Abständen der Retroreflektoren zu dem Referenzpunkt und den bekannten Relativpositionen der Retroreflektoren zueinander kann dann die Position des Objekts bestimmt werden. Sollen alle drei Koordinaten des Objekts bestimmt werden, weist das Positionierungselement bei der in Fig. 7 dargestellten Vorrichtung 101 wenigstens drei nicht auf einer Geraden liegende Retroreflektoren auf, und die Position des Objekts kann durch Trilateration bestimmt werden. Kann sich das Objekt nur in einer Ebene bewegen, können auch nur zwei Retroreflektoren an dem Positionierungselement 102 vorgesehen sein, um die beiden unbekannten Koordinaten des Objekts zu ermitteln.

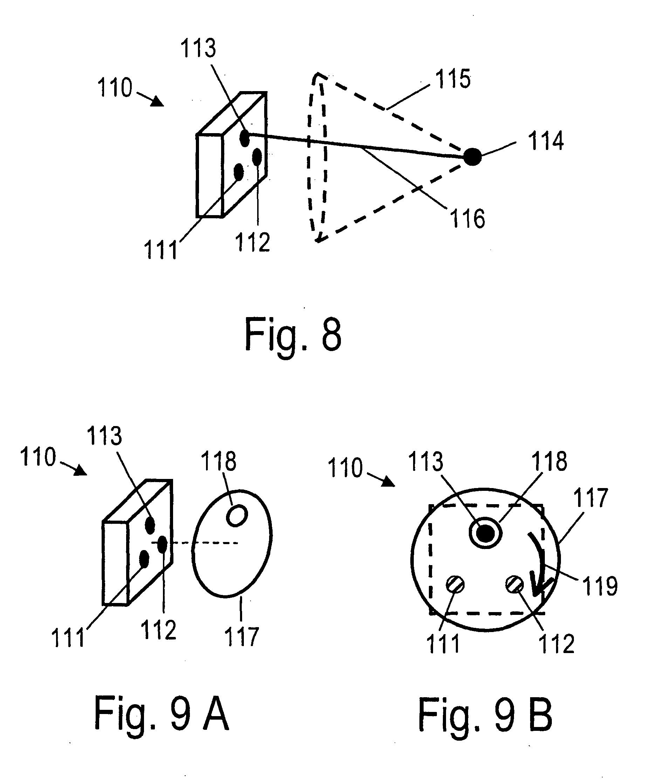

Fig. 8 zeigt eine mögliche Ausgestaltung eines Positionierungselements 110, das bei der Vorrichtung 101 von Fig. 7 als Positionierungselement 102 verwendet werden kann. Das Positionierungselement 110 ist mit drei Retroreflektoren 111, 112 und 113 versehen. Von einem Referenzpunkt 114 aus wird eine Folge von Lichtpulsen in einem Lichtkegel 115 auf das Positionierungselement 110 eingestrahlt. Wie oben unter Bezugnahme auf Fig. 1-5 beschrieben kann durch Auswertung der Phasenlage des von dem Retroreflektor 113 reflektierten Lichts ein Abstand 116 des Retroreflektors 113 zu dem Referenzpunkt 114 ermittelt werden.

Um auf diese Weise die Abstände aller Retroreflektoren 111, 112 und 113 zu dem Referenzpunkt 114 ermitteln zu können, ist das Positionierungselement 110 so ausgestaltet, dass Lichtsignale, die von den Retroreflektoren 111, 112 und 113 ausgehen, von dem Detektor 13 und/oder der Auswerteschaltung 15 unterscheidbar sind. Bei einer möglichen Ausgestaltung wird dies dadurch erreicht, dass das Positionierungselement 110 eine veränderbare Konfiguration aufweist, die steuerbar, beispielsweise durch ein Steuersignal oder nach einem vorgegebenen Zeitablaufplan, verändert wird.

Fig. 9A zeigt eine Ausgestaltung des Positionierungselements 110 mit veränderbarer Konfiguration, das bei der Vorrichtung 101 von Fig. 7 als Positionierungselement 102 verwendet werden kann. Fig. 9A zeigt eine schematische Explosionsdarstellung und Fig. 9B eine Draufsicht des Positionierungselements 110.

Das Positionierungselement 110 ist mit einem Strahlunterbrecher versehen, der bei der dargestellten Ausgestaltung als lichtundurchlässige Scheibe 117 mit einer Öffnung 118 ausgeführt ist. Die Scheibe 117 überdeckt zu jedem Zeitpunkt wenigstens zwei der Retroreflektoren 111 und 112. Wenn die Position eines Retroreflektors bestimmt werden soll, wird die Scheibe 117 durch eine Drehung 119 derart positioniert, dass die Öffnung 118 benachbart zu dem Retroreflektor angeordnet ist, dessen Position bestimmt werden soll. Durch kontrollierte Drehung der Scheibe 117 können sequentiell die Abstände der Retroreflektoren 111, 112 und 113 zu einem Referenzpunkt bestimmt werden. Die Häufigkeit, mit der die Konfiguration des Positionierungselements 110 geändert wird, kann geeignet in Abhängigkeit von erwarteten Bewegungsgeschwindigkeiten des Objekts gewählt werden, um eine Verfolgung der Objektposition nahezu in Echtzeit zu erlauben.

Andere Ausgestaltungen des Positionierungselements 110 mit veränderbarer Konfiguration sind ebenfalls möglich. Beispielsweise kann anstelle der drehbaren Scheibe 117 ein Verschluss bzw. Shutter vor jedem der Retroreflektoren 111, 112 und 113 angeordnet sein, wobei die Shutter steuerbar geöffnet und geschlossen werden können, um die zugeordneten Retroreflektoren 111, 112 und 113 freizugeben bzw. zu verdecken.

Die Auswerteschaltung 15 der Vorrichtung 101 von Fig. 7 ist eingerichtet, um sequentiell Lichtsignale zu verarbeiten, die von den unterschiedlichen Retroreflektoren zurück in Richtung des Detektors 13 reflektiert wurden. Jedes der Lichtsignale umfasst dabei einen Zug von Lichtpulsen, d.h. die Konfiguration des Positionierungselements 110 ändert sich nur über Zeitskalen, die lange im Vergleich zu T0 sind.

Auch wenn bei der unter Bezugnahme auf Fig. 7-9 erläuterten Vorrichtung die Positionsbestimmung unter Verwendung mehrerer Retroreflektoren in einem einzigen Lichtkegel beschrieben wurde, können mehrere Lichtkegel in Kombination mit mehreren Retroreflektoren verwendet werden. Somit ist eine Kombination der unter Bezugnahme auf Fig. 1-6 bzw. Fig. 7-9 erläuterten Methoden zur Positionsbestimmung möglich.

Die Verwendung mehrerer Reflektoren kann beispielsweise dann erwünscht sein, wenn nicht nur die Koordinaten eines gegebenen Objektpunkts, sondern zusätzlich auch eine Ausrichtung des Objekts ermittelt werden soll. Ein Beispiel hierfür ist ein mechanischer Tastkopf, bei dem neben den Koordinaten eines Punkts des Tastkopfes auch die Ausrichtung seines Schafts optisch erfasst werden soll. Hierfür können mindestens zwei Retroreflektoren angebracht werden und drei Strahlkegel verwendet werden. Drei Retroreflektoren können an dem Tastkopf vorgesehen sein, wenn bei einer Konfiguration mit drei Strahlkegeln mehrere Kippwinkel ermittelt werden sollen.

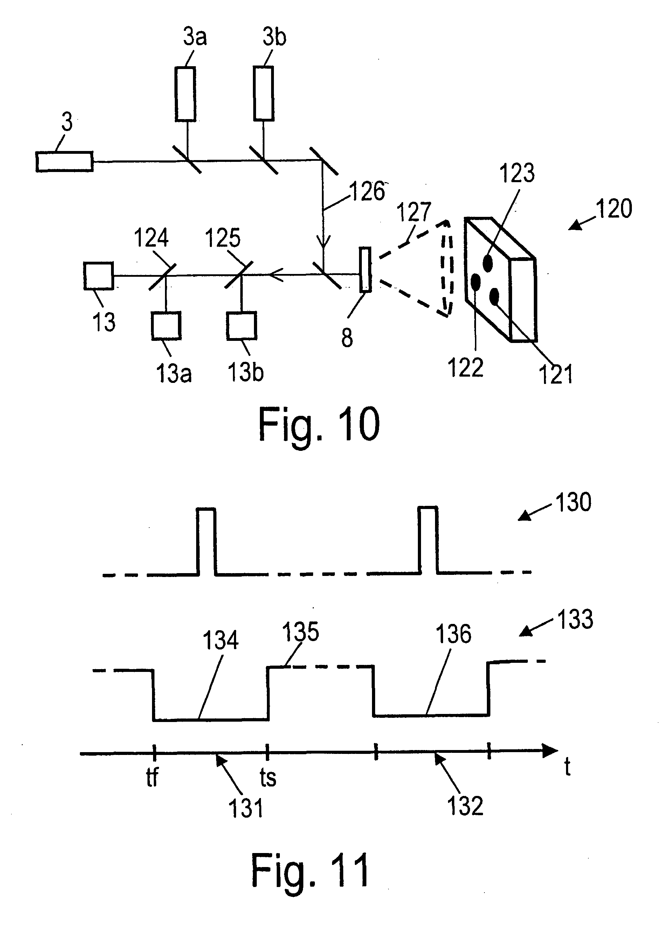

Fig. 10 ist eine schematische Darstellung einer Vorrichtung 120 zum Bestimmen einer Position eines Objekts. Dabei sind Komponenten der Vorrichtung 120, die eine identische oder ähnliche Funktionsweise wie bereits unter Bezugnahme auf Fig. 1-9 erläuterte Komponenten aufweisen, mit denselben oder ähnlichen Bezugszeichen versehen und werden hier nicht mehr eingehend erläutert. Nach Ausführungsbeispielen kann die Bestimmung der Phasenlage wie unter Bezugnahme auf Figur 5 beschrieben erfolgen.

Die Vorrichtung 120 weist drei Lichtquellen 3, 3a, 3b auf, von denen jede eine Folge kurzer Lichtpulse erzeugt. Jede der Lichtquellen kann wie für die Lichtquelle 3 unter Bezugnahme auf Fig. 1-5 erläutert ausgestaltet sein. Die Lichtwellenlängen $\lambda_1$, $\lambda_2$ und $\lambda_3$ der von den drei Lichtquellen erzeugten Strahlen sind paarweise unterschiedlich. Die Repetitionsraten der drei von den Lichtquellen 3, 3a, 3b erzeugten Folgen von Lichtpulsen können identisch sein, aber auch unterschiedlich gewählt werden. Die Ausgangssignale der drei Lichtquellen 3, 3a, 3b werden zu einem Strahl 126 kombiniert und in einem Lichtkegel 127 in den Raumbereich eingestrahlt, in dem die Position des Objekts bestimmt werden soll.

Die Vorrichtung 120 weist weiterhin drei Reflektoren 121, 122, 123 auf, die wellenlängenselektive Reflexionseigenschaften aufweisen. Beispielsweise reflektiert Reflektor 121 Licht mit der Wellenlänge $\lambda_1$ stärker als Licht mit den Wellenlängen $\lambda_2$ und $\lambda_3$, während Reflektor 122 Licht mit der Wellenlänge $\lambda_2$ stärker reflektiert als Licht mit den Wellenlängen $\lambda_2$ und $\lambda_3$ und Reflektor 123 Licht mit der Wellenlänge $\lambda_3$ stärker reflektiert als Licht mit den Wellenlängen $\lambda_1$ und $\lambda_2$.

Die Vorrichtung 120 weist weiterhin zwei dichroische Strahlteiler bzw. dichroische Spiegel 124 und 125 und drei Detektoren 13, 13a, 13b auf. Die von den Reflektoren 121, 122 und 123 reflektierten Folgen von Lichtpulsen mit den Lichtwellenlängen $\lambda_1$, $\lambda_2$ und $\lambda_3$ werden auf den dichroischen Spiegel 125 gelenkt, der die von dem Reflektor 121 reflektierte Folge von Lichtpulsen mit der Lichtwellenlänge $\lambda_1$ zu dem Detektor 13b lenkt. Der von dem dichroischen Spiegel 125 transmittierte Strahl fällt auf den dichroischen Spiegel 124, der die von dem Reflektor 122 reflektierte Folge von Lichtpulsen mit der Lichtwellenlänge $\lambda_2$ zu dem Detektor 13a lenkt. Der von dem dichroischen Spiegel 124 transmittierte Strahl wird von dem Detektor 13 erfasst.

Das Ausgangssignal jedes der Detektoren 13, 13a, 13b kann wie oben für das Ausgangssignal der Detektoren 13 und 14 in Fig. 1-8 beschrieben verarbeitet werden, um die Abstände der drei Reflektoren 121, 122, 123 von dem virtuellen Ausgangspunkt des Lichtkegels 127 zu bestimmen. Basierend auf den so ermittelten Abständen kann die Position des Objekts bestimmt werden, wie unter Bezugnahme auf 8 beschrieben.

Bei der Vorrichtung 120 erfolgt die Bestimmung der Objektposition basierend auf den Abständen mehrerer Reflektoren 121, 122, 123 zu einem Referenzpunkt. Aufgrund der Wellenlängenselektivität der Reflexionseigenschaften können die Abstände der drei Reflektoren gleichzeitig bestimmt werden.

Bei den oben unter Bezugnahme auf Fig. 1-10 erläuterten Vorrichtungen und Verfahren treffen auf die Photoempfänger 11, 12, 13 und 14 Nutzsignale auf, bei denen es sich um kurze Pulse handelt. Die Pulsdauer kann beispielsweise 100 fs betragen. Der zeitliche Abstand T0 zwischen aufeinanderfolgenden Pulsen ist durch den Kehrwert der Repetitionsrate gegeben. Für f0 = 100 MHz ist T0 beispielsweise 10 ns. Für die genannten beispielhaften Größen trifft nur in einem Zeitintervall, dessen Länge 100 fs/10 ns = $1/10^5$ der Zeitdauer T0 zwischen aufeinanderfolgenden Lichtpulsen beträgt, ein Nutzsignal an den Detektoren 11, 12, 13 und 14 ein. Es liegt eine sehr große Zeitspanne vor, in der kein Nutzsignal die Photoempfänger erreicht.

Die Vorrichtungen 1, 101 und 120 können daher so ausgestaltet sein, dass in Zeitintervallen, in denen keiner der von der Lichtquelle 3 erzeugten Lichtpulse an den Photoempfängern 11, 12, 13 bzw. 14 und 13, 13a, 13b eintreffen kann, der Lichteinfall auf die Photoempfänger blockiert und/oder eine Signalverarbeitung der von den Photoempfängern 11, 12,13 bzw. 14 und 13,13a, 13b an die Auswerteschaltung ausgegebenen Signale mit einer Sperreinrichtung blockiert wird. Beispielhaft ist bei der Vorrichtung 101 von Fig. 7 ein im Strahlengang zwischen dem Strahlteiler 5 und dem Detektor 13 angeordneter Lichtunterbrecher 105 dargestellt. Derartige Lichtunterbrecher können auch vor allen anderen Detektoren 11, 12 und 14 bzw. 13, 13a, 13b der Vorrichtungen 1, 101 und 120 vorgesehen sein. Alternativ oder zusätzlich können schnell schaltbare Elemente in den Signalverarbeitungspfaden der Auswerteschaltung 15 vorgesehen sein, die die Signalverarbeitungspfade in den Zeitintervallen öffnen, in denen keine Lichtpulse auf den zugeordneten Detektor einfallen können.

Durch eine solche selektive Deaktivierung der Signalverarbeitung kann Rauschen, das während des Zeitintervalls, in dem kein Nutzsignal verarbeitet wird, zu einer Verschlechterung des Signal/Rausch-Verhältnisses beitragen könnte, unterdrückt werden. Das verhältnismäßig kurze Zeitintervall, in dem Signale erfasst und verarbeitet werden, also die Öffnungszeit für das Durchlassen eines Nutzpulses, wird in Abhängigkeit von der Repetitionsrate und maximal zu erwartenden Laufzeitunterschieden zwischen Nah- und Fernpunkt einer Messstrecke so gewählt, dass sichergestellt ist, dass jeder Lichtpuls erfasst und verarbeitet wird.

Fig. 11 zeigt beispielhaft ein Nutzsignal 130 aus einer Folge von Lichtpulsen mit einem großen zeitlichen Abstand zwischen den Lichtpulsen. Fig. 11 zeigt weiterhin einen Schaltzustand 133 einer Sperreinrichtung, die eine Signalerfassung und/oder - verarbeitung nur in Zeitintervallen 131 und 132 erlaubt, in denen ein Lichtpuls eintreffen kann. Dabei sind die Grenzen des Zeitintervalls 131 durch die früheste mögliche Ankunftszeit tf eines Lichtpulses und die späteste mögliche Ankunftszeit ts des Lichtpulses gegeben. In den Zeitintervallen 131 und 132 weist die Sperreinrichtung einen Schaltzustand 134 bzw. 136 auf, der die Signalerfassung und -verarbeitung erlaubt, während die Sperreinrichtung zu jeder anderen Zeit einen Schaltzustand 135 aufweist, in dem die Signalerfassung und/oder -verarbeitung unterdrückt wird.

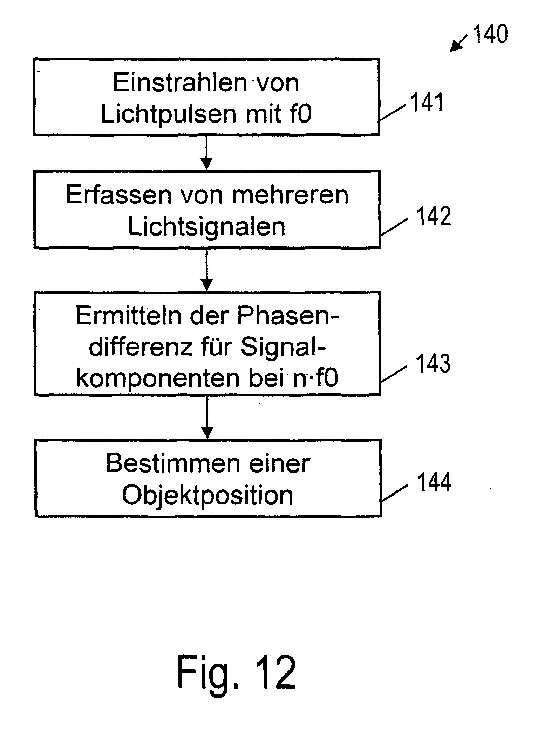

Fig. 12 ist eine Flussdiagrammdarstellung eines Verfahrens 140 zum Bestimmen einer Position eines Objekts in einem Raumbereich. Das Verfahren kann mit der unter Bezugnahme auf Fig. 1-5 erläuterten Vorrichtung 1, mit der unter Bezugnahme auf Fig. 7-9 erläuterten Vorrichtung 101, mit der unter Bezugnahme auf Fig. 10 erläuterten Vorrichtung 120 oder mit einer Vorrichtung nach einem weiteren Ausführungsbeispiel durchgeführt werden, sofern zur Bestimmung einer Phasenlage eine Signalkomponente von Lichtsignalen in mehreren Stufen heruntergemischt wird.

Bei 141 wird eine Folge von Lichtpulsen mit einer Repetitionsrate in einen Raumbereich eingestrahlt. Die Folge von Lichtpulsen kann, wie in Fig. 1 dargestellt, von mehreren Referenzpunkten aus in den Raumbereich gelenkt werden, oder, wie in Fig. 7 und Fig. 10 dargestellt, von einem Referenzpunkt aus in den Raumbereich gelenkt werden.

Bei 142 werden mehrere Lichtsignale aus dem Raumbereich erfasst. Die Lichtsignale entstehen durch Reflexion und/oder Streuung der eingestrahlten Folge von Lichtpunkten an dem Objekt. Die Lichtsignale werden in dem Raumbereich in unterschiedlichen Richtungen reflektiert und/oder gestreut. Die Lichtsignale können, wie in Fig. 1 dargestellt, von einem Retroreflektor in Richtung mehrerer Detektoren oder, wie in Fig. 7 dargestellt, von mehreren Retroreflektoren in Richtung eines Detektors, oder, wie in Fig. 10 dargestellt, von mehreren Retroreflektoren in Richtung mehrerer Detektoren reflektiert und/oder gestreut werden.

Bei 143 wird für jedes der Lichtsignale eine Phasenverschiebung einer Signalkomponente des Lichtsignals ermittelt, wobei die Signalkomponente so gewählt wird, dass sie eine Frequenz aufweist, die einem Vielfachen $n \cdot f0$ der Repetitionsrate f0 entspricht. Die Signalkomponente kann unter Verwendung eines Bandpassfilters aus den erfassten Lichtsignalen selektiert werden. Die Phasenverschiebung kann in Bezug auf eine Referenzsignalkomponente ermittelt werden, die eine Frequenz aufweist, die ebenfalls dem Vielfachen $n \cdot f0$ der Repetitionsrate f0 entspricht.

Bei 144 wird basierend auf den ermittelten Phasendifferenzen die Position des Objekts bestimmt. Dabei können Koordinaten eines bestimmten Objektpunkts und/oder die Ausrichtung des Objekts definierende Winkelkoordinaten bestimmt werden.

Wie im Zusammenhang mit Gleichungen (2)-(6) erläutert wurde, kann die Bestimmung der Objektposition bei 144 erfordern, dass bereits ein ausreichend guter Schätzwert für Abstände zwischen Objekt und den Referenzpunkten existiert, so dass Gleichung (3) erfüllt ist. Dies kann beispielsweise erreicht werden, indem die Objektposition zunächst mit einem ungenaueren Verfahren, z.B. unter Verwendung mehrerer Kameras in Kombination mit Triangulationsmethoden, abgeschätzt wird.

Bei einer weiteren Ausgestaltung können Verfahrensschritte des Verfahrens 140 iterativ wiederholt werden, wobei mit zunehmender Anzahl von Iterationen Signalkomponenten mit höherer Frequenz ausgewertet werden. Dies kann durch eine geeignete Ausgestaltung der Auswerteschaltung 15 in Fig. 1 und 7 implementiert werden

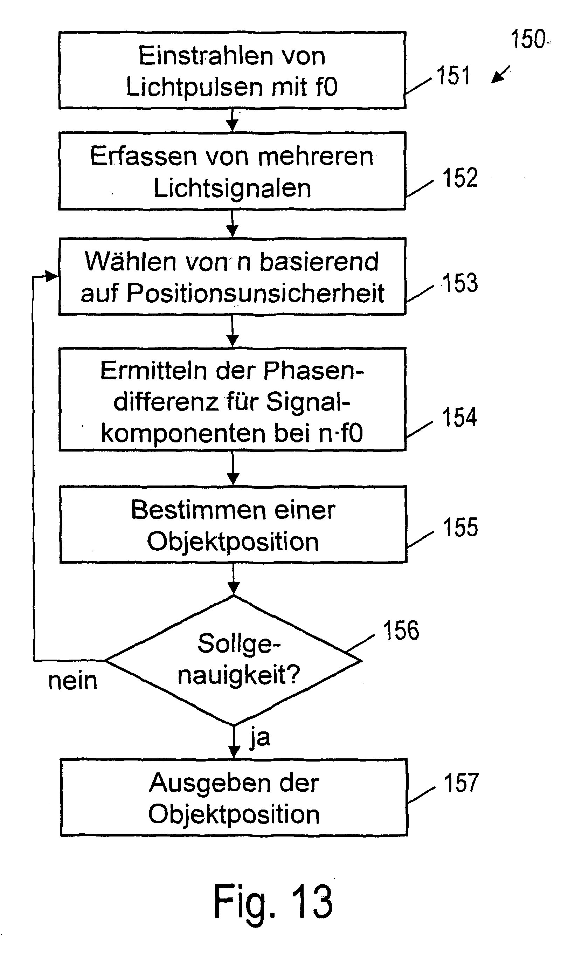

Fig. 13 ist eine Flussdiagrammdarstellung eines Verfahrens 150 zum Bestimmen einer Position eines Objekts in einem Raumbereich, das auf dem Verfahren 140 von Fig. 12 beruht und bei dem die Genauigkeit der Positionsbestimmung iterativ verbessert wird.

Bei 151 und 152 wird, wie bei Schritten 141 und 142 des Verfahrens 140, eine Folge von Lichtpulsen eingestrahlt, und von dem Objekt reflektierte und/oder gestreute Folgen von Lichtpulsen werden erfasst.

Bei 153 wird eine natürliche Zahl n ausgewählt, wobei nachfolgend die Phasendifferenz für die Signalkomponente mit Frequenz $n \cdot f0$, ermittelt wird. Die Zahl n wird dabei in Abhängigkeit von der aktuellen Unsicherheit über die Objektposition bzw. einer Genauigkeit eines bereits existierenden Schätzwerts für die Objektposition so gewählt, dass Gleichung (3) erfüllt ist. Bei der ersten Iteration kann auch n=1 gewählt werden.

Die nachfolgenden Schritte 154 und 155 sind wie die Schritte 143 und 144 des Verfahrens 140 implementiert, wobei eine verbesserte Objektposition basierend auf den Phasendifferenzen der Signalkomponenten mit Frequenz $n \cdot f0$ von mehreren Lichtsignalen ermittelt wird.

Bei 156 wird überprüft, ob die Objektposition mit ausreichender Genauigkeit bestimmt wurde. Falls bei 156 ermittelt wird, dass die Objektposition mit ausreichender Genauigkeit bestimmt wurde, wird bei 157 die zuletzt ermittelte Objektposition ausgegeben und/oder weiter verarbeitet. Andernfalls kehrt das Verfahren zu Schritt 153 zurück, wo nunmehr ein größerer Wert n für die nächste Iteration gewählt werden kann.

Die Vorrichtungen und Verfahren nach verschiedenen Ausführungsbeispielen der Erfindung erlauben eine schnelle Positionsbestimmung mit hoher Ortsauflösung, die zur Bestimmung von mehr als einer Koordinate des Objekts geeignet ist. Die Vorrichtungen und Verfahren können allgemein zur Bestimmung von Objektpositionen in einem Raumbereich eingesetzt werden, wobei beispielhafte Anwendungsfelder Messanwendungen in industriellen Anlagen, beispielsweise in automatisierten Fertigungs- oder Transportanlagen oder dergleichen sind.

## Patentansprüche

**1.** Vorrichtung zum Bestimmen einer Position eines Objekts (25; 102) in einem Raumbereich (28), umfassend
eine Lichtquelle (3; 3, 3a, 3b) zum Erzeugen einer Folge von Lichtpulsen (31) mit einer Repetitionsrate,
eine Lichtlenkeinrichtung (4-9; 4, 5, 8), die angeordnet ist, um einen Anteil eines Lichtpulses der Folge von Lichtpulsen (31) in den Raumbereich (28) zu lenken,
eine Detektoranordnung (13,14; 13; 13, 13a, 13b), die eingerichtet ist, um eine Mehrzahl von Lichtsignalen (23, 24; 103, 104) zu erfassen, die in dem Raumbereich (28) in eine Mehrzahl unterschiedlicher Richtungen reflektiert und/oder gestreut werden, und
eine Auswerteschaltung (15), die mit der Detektoranordnung (13, 14; 13; 13, 13a, 13b) gekoppelt ist und einen Referenzsignaleingang (16) zum Empfangen eines Referenzsignals (20; 86) aufweist,
wobei die Auswerteschaltung (15) eingerichtet ist, um für jedes Lichtsignal (23, 24; 103, 104) der von der Detektoranordnung (13, 14; 13; 13, 13a, 13b) erfassten Mehrzahl von Lichtsignalen (23, 24; 103, 104) eine zugeordnete

**EP 2 329 294 B1**

Phasendifferenz (67) zwischen dem Referenzsignal (20; 86) und einer Signalkomponente (81) des entsprechenden Lichtsignals (23, 24; 103, 104) zu ermitteln, wobei die Signalkomponente (81) jeweils eine Frequenz aufweist, die einem Vielfachen der Repetitionsrate entspricht, und um die Position des Objekts (25; 102) basierend auf den der Mehrzahl von Lichtsignalen (23, 24; 103, 104) zugeordneten Phasendifferenzen (67) zu bestimmen, wobei die Auswerteschaltung (15) eingerichtet ist, um zum Bestimmen der der Mehrzahl von Lichtsignalen (23, 24; 103, 104) zugeordneten Phasendifferenzen (67) die Signalkomponenten (81) in mehreren Stufen herunterzumischen, wobei zum Heruntermischen die Signalkomponenten (81) jeweils mit einer Referenzsignalkomponente (82, 84) des Referenzsignals (20) gemischt werden, das basierend auf der Folge von Lichtpulsen (31) erzeugt wird.

**2.** Vorrichtung nach Anspruch 1,
wobei die Lichtlenkeinrichtung (4-9; 4, 5, 8) angeordnet ist, um einen weiteren Anteil des Lichtpulses der Folge von Lichtpulsen (31) als Referenzsignal (20) zu wenigstens einem Referenzsignaldetektor (11, 12) zu lenken,
wobei der Referenzsignaleingang (16) der Auswerteschaltung (15) mit dem wenigstens einen Referenzsignaldetektor (12) gekoppelt ist, um das von dem wenigstens einen Referenzsignaldetektor (12) erfasste Referenzsignal (20) zu empfangen.

**3.** Vorrichtung nach Anspruch 1 oder 2,
wobei die Detektoranordnung eine Mehrzahl von optischen Detektoren (13, 14; 13, 13a, 13b) umfasst, die angeordnet sind, um jeweils ein Lichtsignal (23, 24) der Mehrzahl von Lichtsignalen (23, 24) zu erfassen,
wobei die Lichtlenkeinrichtung (4-9) eine Mehrzahl von Strahlteilern (5, 7) umfasst, um die Folge von Lichtpulsen (31) zu empfangen und in den Raumbereich (28) zu lenken, wobei die Mehrzahl von optischen Detektoren (13, 14) derart angeordnet ist, dass ein optischer Detektor (13) der Mehrzahl von optischen Detektoren (13, 14; 13, 13a, 13b) ein Lichtsignal (23) aus dem Raumbereich (28) über einen zugeordneten Strahlteiler (5) der Mehrzahl von Strahlteilern (5, 7) empfängt,
wobei der optische Detektor (13) der Mehrzahl von optischen Detektoren (13, 14) angeordnet ist, um einen in dem Raumbereich (28) reflektierten und/oder gestreuten Anteil (23) der Folge von Lichtpulsen (31) zu empfangen, die von dem dem optischen Detektor (13) zugeordneten Strahlteiler (5) in den Raumbereich (28) gelenkt wird,
wobei die Mehrzahl von Strahlteilern (13, 14) wenigstens drei nicht auf einer Geraden angeordnete Strahlteiler umfasst.

**4.** Vorrichtung nach Anspruch 1 oder Anspruch 2,
wobei die Detektoranordnung einen optischen Detektor (13) umfasst, der eingerichtet ist, um die Mehrzahl von Lichtsignalen (103, 104) sequentiell zu erfassen.

**5.** Vorrichtung nach Anspruch 4, umfassend
ein an dem Objekt anzubringendes Positionierungselement (102; 110), dessen lichtreflektierende und/oder lichtstreuende Eigenschaften veränderbar sind,
wobei das Positionierungselement (102; 110) eine Mehrzahl von Reflektoren (111-113) aufweist und wenigstens einer der Mehrzahl von Reflektoren (111-113) abdeckbar ist.

**6.** Vorrichtung nach einem der vorhergehenden Ansprüche,
wobei die Lichtlenkeinrichtung (4-9; 4, 5, 8) wenigstens einen Lichtaufweiter (8, 9; 8) zum Aufweiten des in den Raumbereich (28) zu lenkenden Anteils der Folge von Lichtpulsen (31) umfasst.

**7.** Vorrichtung nach einem der vorhergehenden Ansprüche,
wobei die Auswerteschaltung (15) eingerichtet ist, um iterativ für mehrere Signalkomponenten (81) eines Lichtsignals (23, 24; 103, 104) mit unterschiedlicher Frequenz jeweils eine zugeordnete Phasendifferenz (67) zu bestimmen,
wobei wenigstens eine der mehreren Signalkomponenten (81) eine Frequenz aufweist, die einem Vielfachen der Repetitionsrate entspricht.

**8.** Vorrichtung nach einem der vorhergehenden Ansprüche,
wobei die Vorrichtung eine Sperreinrichtung (105) aufweist, um während eines wenigstens basierend auf der Repetitionsrate der Folge von Lichtpulsen bestimmten Zeitintervalls ein Auftreffen von Licht auf die Detektoranordnung (13, 14; 13) und/oder eine Verarbeitung von Signalen durch die Auswerteschaltung (15) zu unterdrücken.

**9.** Vorrichtung nach einem der vorhergehenden Ansprüche,
wobei die Lichtquelle (3) einen Kurzpulslaser umfasst.

**10.** Vorrichtung nach einem der vorhergehenden Ansprüche,
wobei die Vorrichtung eine industrielle Koordinatenmessmaschine oder eine Vorrichtung zur Bestimmung einer Position eines Roboters (2) ist.

**11.** Verfahren zum Bestimmen einer Position eines Objekts (25; 102) in einem Raumbereich (28), umfassend
Einstrahlen einer Folge von Lichtpulsen (31) mit einer Repetitionsrate in den Raumbereich (28),
Erfassen einer Mehrzahl von Lichtsignalen (23, 24; 103, 104), die in dem Raumbereich (28) von dem Objekt (25; 102) aufgrund von Reflexion und/oder Streuung der eingestrahlten Folge von Lichtpulsen (31) in eine Mehrzahl unterschiedlicher Richtungen reflektiert und/oder gestreut werden,
wobei für jedes Lichtsignal (23, 24; 103, 104) der erfassten Mehrzahl von Lichtsignalen (23, 24; 103, 104) eine zugeordnete Phasendifferenz (67) zwischen der eingestrahlten Folge von Lichtpulsen (31) und einer Signalkomponente (81) des entsprechenden Lichtsignals (23, 24; 103, 104) ermittelt wird, wobei die Signalkomponente (81) jeweils eine Frequenz aufweist, die einem Vielfachen der Repetitionsrate entspricht,
wobei zum Bestimmen der der Mehrzahl von Lichtsignalen (23, 24; 103, 104) zugeordneten Phasendifferenzen (67) die Signalkomponenten (81) in mehreren Stufen heruntergemischt werden,
wobei zum Heruntermischen die Signalkomponenten (81) jeweils mit einer Referenzsignalkomponente (82, 84) des Referenzsignals (20) gemischt werden, das basierend auf der Folge von Lichtpulsen (31) erzeugt wird, und
wobei die Position des Objekts (25; 102) basierend auf den der Mehrzahl von Lichtsignalen (23, 24; 103, 104) zugeordneten Phasendifferenzen bestimmt wird.

**12.** Verfahren nach Anspruch 11,
wobei wenigstens drei räumliche Koordinaten des Objekts (25; 102) bestimmt werden, und
wobei die Folge von Lichtpulsen (31) von einer Mehrzahl von Einstrahlpunkten (5, 7; 91-93) aus in den Raumbereich (28) eingestrahlt wird, die nicht auf einer Geraden angeordnet sind.

**13.** Verfahren nach Anspruch 11 oder Anspruch 12,
wobei das Verfahren mit einer Vorrichtung (1; 101; 120) nach einem der Ansprüche 1-10 durchgeführt wird.


**Claims**

**1.** Device for determining a position of an object (25; 102) in a spatial region (28), comprising
a light source (3; 3, 3a, 3b) for generating a sequence of light pulses (31) with a repetition rate,
a light directing device (4-9; 4, 5, 8) arranged to direct a portion of a light pulse of said sequence of light pulses (31) into said spatial region (28),
a detector arrangement (13, 14; 13; 13, 13a, 13b) configured to detect a plurality of light signals (23, 24; 103, 104) which, within said spatial region (28), are reflected and/or scattered into a plurality of different directions, and
an evaluation circuit (15) coupled to said detector arrangement (13, 14; 13; 13, 13a, 13b) and having a reference signal input (16) for receiving a reference signal (20; 86),
said evaluation circuit (15) being configured to determine for each light signal (23, 24; 103, 104) of said plurality of light signals (23, 24; 103, 104) detected by said detector arrangement (13, 14; 13; 13, 13a, 13b) an associated phase difference (67) between said reference signal (20; 86) and a signal component (81) of the respective light signal (23, 24; 103, 104), said signal component (81) respectively having a frequency which corresponds to a multiple of said repetition rate, and to determine said position of said object (25; 102) based on said phase differences (67) associated with said plurality of light signals (23, 24; 103, 104),
said evaluation circuit (15) being configured to mix down said signal components (81) in several stages to determine said phase differences (67) associated with said plurality of light signals (23, 24; 103, 104), said signal components (81) being respectively mixed with a reference signal component (82, 84) of said reference signal (20) which is generated based on said sequence of light pulses (31) for down-mixing.

**2.** Device according to claim 1,
said light directing device (4-9; 4, 5, 8) being arranged to direct another portion of said light pulse of said sequence of light pulses (31) as reference signal (20) to at least one reference signal detector (11, 12),
said reference signal input (16) of said evaluation circuit (15) being coupled to said at least one reference signal detector (12) to receive said reference signal (20) detected by said at least one reference signal detector (12).

**3.** Device according to claim 1 or 2,
said detector arrangement comprising a plurality of optical detectors (13, 14; 13, 13a, 13b) which are arranged to respectively detect one light signal (23, 24) of said plurality of light signals (23, 24),
said light directing device (4-9) comprising a plurality of beam splitters (5, 7) to receive said sequence of light pulses (31) and to direct it into said spatial region (28), said plurality of optical detectors (13, 14) being arranged such that an optical detector (13) of said plurality of optical detectors (13, 14; 13, 13a, 13b) receives a light signal (23) from said spatial region (28) via an associated beam splitter (5) of said plurality of beam splitters (5, 7),
said optical detector (13) of said plurality of optical detectors (13, 14) being arranged to receive a portion (23) of said sequence of light pulses (31) directed into said spatial region (28) by said beam splitter (5) associated with said optical detector (13), which portion is reflected and/or scattered within said spatial region (28),
said plurality of beam splitters (13, 14) comprising at least three beam splitters which are not arranged on a straight line.

4. Device according to claim 1 or claim 2,
said detector arrangement comprising an optical detector (13) configured to receive said plurality of light signals (103, 104) in a sequential manner.

5. Device according to claim 4, comprising
a positioning member (102; 110) to be mounted on said object, wherein light reflecting and/or light scattering characteristics of said positioning member are alterable,
wherein said positioning member (102; 110) has a plurality of reflectors (111-113) and wherein at least one of said plurality of reflectors (111-113) can be concealed.

6. Device according to any one of the preceding claims,
said light directing device (4-9; 4, 5, 8) comprising at least one light expander (8, 9; 8) for expanding said portion of said sequence of light pulses (31) which is to be directed into said spatial region (28).

7. Device according to any one of the preceding claims,
said evaluation circuit (15) being configured to respectively determine, in an iterative manner, an associated phase difference (67) for plural signal components (81) of a light signal (23, 24; 103, 104) having different frequencies, at least one of said plural signal components (81) having a frequency which corresponds to a multiple of said repetition rate.

8. Device according to any one of the preceding claims,
said device having a blocking device (105) to suppress incidence of light onto said detector arrangement (13, 14; 13) and/or processing of signals by said evaluation circuit (15) during a time interval which is determined based at least on said repetition rate of said sequence of light pulses.

9. Device according to any one of the preceding claims,
said light source (3) comprising a short-pulse laser.

10. Device according to any one of the preceding claims,
said device being an industrial coordinate measuring machine or a device for determining a position of a robot (2).

11. Method for determining a position of an object (25; 102) in a spatial region (28), comprising
irradiating a sequence of light pulses (31) with a repetition rate into said spatial region (28),
detecting a plurality of light signals (23, 24; 103, 104) which are reflected and/or scattered into a plurality of different directions, due to reflection and/or scattering of said irradiated sequence of light pulses (31) by said object (25; 102), within said spatial region (28),
wherein for each light signal (23, 24; 103, 104) of the detected plurality of light signals (23, 24; 103, 104) an associated phase difference (67) between said irradiated sequence of light pulses (31) and a signal component (81) of the respective light signal (23, 24; 103, 104) is determined, said signal component (81) respectively having a frequency which corresponds to a multiple of said repetition rate,
wherein said signal components (81) are mixed down in several stages to determine said phase differences (67) associated with said plurality of light signals (23, 24; 103, 104),
wherein the signal components (81) are respectively mixed with a reference signal component (82, 84) of the reference signal (20) which is generated based on the sequence of light pulses (31) for down-mixing, and
wherein said position of said object (25; 102) is determined based on said phase differences associated with said plurality of light signals (23, 24; 103, 104).

**12.** Method according to claim 11,
wherein at least three spatial coordinates of said object (25; 102) are determined, and
wherein said sequence of light pulses (31) is irradiated into said spatial region (28) from a plurality of irradiation
points (5, 7; 91-93) which are not located on a straight line.

**13.** Method according to claim 11 or claim 12,
wherein said method is performed using said device (1; 101; 120) according to any one of claims 1-10.

**Revendications**

**1.** Dispositif permettant de déterminer une position d'un objet (25 ; 102) dans une zone dans l'espace (28), comportant
une source lumineuse (3 ; 3, 3a, 3b) permettant de générer une succession d'impulsions lumineuses (31) avec une
vitesse de répétition,
un dispositif de guidage de la lumière (4-9 ; 4, 5, 8), qui est disposé pour diriger vers la zone dans l'espace (28)
une partie d'une impulsion lumineuse parmi la succession d'impulsions lumineuses (31),
un dispositif de détection (13, 14 ; 13 ; 13, 13a, 13b) qui est configuré pour détecter une pluralité de signaux lumineux
(23, 24 ; 103, 104) qui sont réfléchis et/ou dispersés dans une pluralité de directions différentes dans la zone dans
l'espace (28), et
un circuit d'analyse (15), qui est couplé au dispositif de détection (13, 14 ; 13 ; 13, 13a, 13b) et une entrée de signaux
de référence (16) permettant de recevoir un signal de référence (20 ; 86),
dans lequel dispositif ledit circuit d'analyse (15) étant configuré pour déterminer, pour chaque signal lumineux (23,
24 ; 103, 104) parmi la pluralité de signaux lumineux (23, 24 ; 103, 104) détectés par l'organe de détection (13, 14 ;
13 ; 13, 13a, 13b), une différence de phase (67) associée entre le signal de référence (20 ; 86) et une composante
(81) du signal lumineux (23, 24 ; 103, 104) correspondant, ladite composante de signal (81) ayant dans chaque cas
une fréquence qui correspond à un multiple de la vitesse de répétition, et pour déterminer la position de l'objet (25 ;
102) sur la base des différences de phase (67) associées à la pluralité de signaux lumineux (23, 24 ; 103, 104),
dans lequel dispositif ledit circuit d'analyse (15) étant configuré pour mixer vers le bas en plusieurs niveaux la
composante de signal (81) afin de déterminer les différences de phase (67) associées à la pluralité de signaux
lumineux (23, 24 ; 103, 104), les composantes de signal (81) étant mixées dans chaque cas, en vue du mixage
vers le bas, à une composante (82, 84) du signal de référence (20), qui est généré sur la base de la succession
d'impulsions lumineuses (31).

**2.** Dispositif selon la revendication 1,
dans lequel le dispositif de guidage de la lumière (4-9 ; 4, 5, 8) est agencé pour diriger une autre partie de l'impulsion
lumineuse de la succession d'impulsions lumineuses (31) en tant que signal de référence (20) vers au moins un
détecteur de signaux de référence (11, 12),
dans lequel l'entrée des signaux de référence (16) du circuit d'analyse (15) est couplée audit au moins un détecteur
de signaux de référence (12) pour recevoir le signal de référence (20) détecté par ledit au moins un détecteur de
signaux de référence (12).

**3.** Dispositif selon la revendication 1 ou 2,
dans lequel le dispositif de détection comporte une pluralité de détecteurs optiques (13, 14 ; 13, 13a, 13b), qui sont
agencés pour détecter chacun un signal lumineux (23, 24) parmi la pluralité de signaux lumineux (23, 24),
dans lequel le dispositif de guidage de la lumière (4-9) comporte une pluralité de séparateurs de faisceau (5, 7) afin
de recevoir la succession d'impulsions lumineuses (31) et afin de la diriger vers la zone dans l'espace (28), ladite
pluralité de détecteurs optiques (13, 14) étant agencés de telle sorte qu'un détecteur optique (13) parmi la pluralité
de détecteurs optiques (13, 14 ; 13, 13a, 13b) reçoit un signal lumineux (23) issu de la zone dans l'espace (28), via
un séparateur de faisceau (5) de la pluralité de séparateurs de faisceau (5, 7),
dans lequel le détecteur optique (13) parmi la pluralité de détecteurs optiques (13, 14) est agencé pour recevoir
une partie (23), réfléchie et/ou dispersée dans la zone dans l'espace (28), de la succession d'impulsions lumineuses
(31), laquelle est dirigée vers la zone dans l'espace (28) par le séparateur de faisceau (5) associé au détecteur
optique (13), dans lequel la pluralité de séparateurs de faisceau (13, 14) comporte au moins trois séparateurs de
faisceau non disposés sur une droite.

**4.** Dispositif selon la revendication 1 ou la revendication 2, dans lequel le dispositif de détection comporte un détecteur
optique (13) qui est configuré pour détecter séquentiellement la pluralité de signaux lumineux (103, 104).

**5.** Dispositif selon la revendication 4, comportant

un élément de positionnement (102 ; 110) à disposer sur l'objet et dont les propriétés de réflexion de la lumière et/ou de dispersion de la lumière peuvent être modifiées,

ledit élément de positionnement (102 ; 110) comportant une pluralité de réflecteurs (111-113), et au moins un réflecteur parmi la pluralité de réflecteurs (111-113) peut être masqué.

**6.** Dispositif selon l'une quelconque des revendications précédentes, dans lequel le dispositif de guidage de la lumière (4-9 ; 4, 5, 8) comporte au moins un élargisseur de lumière (8, 9 ; 8) pour élargir la partie, à diriger vers la zone dans l'espace (28), de la succession d'impulsions lumineuses (31).

**7.** Dispositif selon l'une quelconque des revendications précédentes, dans lequel le circuit d'analyse (15) est configuré pour déterminer de manière itérative pour plusieurs composantes (81) d'un signal lumineux (23, 24 ; 103, 104) avec des fréquences différentes respectivement une différence de phase (67) associée, au moins une composante parmi la pluralité des composantes de signal (81) possédant une fréquence qui correspond à un multiple de la vitesse de répétition.

**8.** Dispositif selon l'une quelconque des revendications précédentes, dans lequel ledit dispositif comporte un dispositif de verrouillage (105) pour empêcher, pendant un intervalle de temps déterminé basé au moins sur la vitesse de répétition de la succession d'impulsions lumineuses, un impact de la lumière sur le dispositif de détection (13, 14 ; 13) et/ou un traitement des signaux par le circuit d'analyse (15).

**9.** Dispositif selon l'une quelconque des revendications précédentes, dans lequel la source lumineuse (3) comporte un laser à courte impulsion.

**10.** Dispositif selon l'une quelconque des revendications précédentes, dans lequel ledit dispositif est une machine industrielle de mesure de coordonnées ou un dispositif permettant de déterminer la position d'un robot (2).

**11.** Procédé permettant de déterminer une position d'un objet (25 ; 102) dans une zone dans l'espace (28), comportant l'injection dans la zone dans l'espace (28) d'une succession d'impulsions lumineuses (31) avec une vitesse de répétition,

la détection d'une pluralité de signaux lumineux (23, 24 ; 103, 104) qui sont réfléchis et/ou dispersés dans une pluralité de directions différentes dans la zone dans l'espace (28) par l'objet (25 ; 102) en raison de la réflexion et/ou de la dispersion de la succession d'impulsions lumineuses (31) injectées,

une différence de phase (67) associée, entre la succession d'impulsions lumineuses (31) injectées et une composante (81) du signal lumineux (23, 24 ; 103, 104) correspondant, étant déterminée pour chaque signal lumineux (23, 24 ; 103, 104) de la pluralité de signaux lumineux (23, 24 ; 103, 104) détectés, ladite composante de signal (81) ayant dans chaque cas une fréquence qui correspond à un multiple de la vitesse de répétition,

les composantes de signal (81) étant mixées vers le bas en plusieurs niveaux pour déterminer les différences de phase (67) associées à la pluralité de signaux lumineux (23, 24 ; 103, 104),

pour le mixage vers le bas, les composantes de signal (81) étant mixées dans chaque cas à une composante (82, 84) du signal de référence (20), qui est généré sur la base de la succession d'impulsions lumineuses (31), et

la position de l'objet (25 ; 102) étant déterminée sur la base des différences de phase associées à la pluralité de signaux lumineux (23, 24 ; 103, 104).

**12.** Procédé selon la revendication 11,

dans lequel sont déterminées au moins trois coordonnées spatiales de l'objet (25 ; 102), et

dans lequel la succession d'impulsions lumineuses (31) est injectée dans la zone dans l'espace (28) à partir d'une pluralité de points d'injection (5, 7 ; 91-93) qui ne sont pas disposés sur une droite.

**13.** Procédé selon la revendication 11 ou la revendication 12, dans lequel ledit procédé est mis en oeuvre avec un dispositif (1 ; 101 ; 120) selon l'une quelconque des revendications 1 à 10.

Fig. 1

EP 2 329 294 B1

Fig. 2 A

Fig. 2 B

Fig. 3

P(t)

61

P(t)

τ    63

62

# Fig. 4 A

65

66

Δφn    67

# Fig. 4 B

Fig. 5

Fig. 6

Fig. 7

Fig. 8

Fig. 9 A

Fig. 9 B

Fig. 10

Fig. 11

↙ 140

```
┌─────────────────────────┐
│   Einstrahlen von       │
│   Lichtpulsen mit f0    │╱─ 141
└─────────────────────────┘
            │
            ▼
┌─────────────────────────┐
│   Erfassen von mehreren │
│   Lichtsignalen         │╱─ 142
└─────────────────────────┘
            │
            ▼
┌─────────────────────────┐
│   Ermitteln der Phasen- │
│   differenz für Signal- │
│   komponenten bei n·f0  │╱─ 143
└─────────────────────────┘
            │
            ▼
┌─────────────────────────┐
│   Bestimmen einer       │
│   Objektposition        │╱─ 144
└─────────────────────────┘
```

# Fig. 12

150

Einstrahlen von
Lichtpulsen mit f0 — 151

Erfassen von mehreren
Lichtsignalen — 152

Wählen von n basierend
auf Positionsunsicherheit — 153

Ermitteln der Phasendifferenz für Signalkomponenten bei n·f0 — 154

Bestimmen einer
Objektposition — 155

Sollgenauigkeit? — 156

nein

ja

Ausgeben der
Objektposition — 157

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10118392 A1
- US 5793483 A
- US 4856893 A
- US 4818100 A

**In der Beschreibung aufgeführte Nicht-Patentliteratur**

- **K. MINOSHIMA ; H. MATSUMOTO.** High-accuracy measurement of 240-m distance in an optical tunnel by use of a compact femtosecond laser. *Applied Optics,* 2000, vol. 39 (30), 5512-5517